# EUROPEAN PATENT SPECIFICATION

(11) **EP 1 278 384 B1**
(45) Date of publication and mention of the grant of the patent: **22.02.2006**
(21) Application number: 00921033.7
(22) Date of filing: 26.04.2000
(51) Int. Cl.: H04Q 7/30

(54) **MULTI-POINT COMMUNICATION METHOD AND COMMUNICATION CONTROL DEVICE**
MEHRPUNKT-KOMMUNIKATIONSVERFAHREN UND KOMMUNIKATIONSSTEUEREINRICHTUNG
PROCEDE DE COMMUNICATION MULTIPOINT ET DISPOSITIF DE COMMANDE DE COMMUNICATION

(43) Date of publication of application: 22.01.2003
(73) Proprietor: FUJITSU LIMITED, Kawasaki-shi, Kanagawa 211-8588 (JP)
(72) Inventor: SATO, Teruyuki, Fujitsu Limited, Kawasaki-shi, Kanagawa 211-8588 (JP); KANAYAMA, Yasutaka, Fujitsu Kyushu Dig. Tech. Ltd., Fukuoka-shi, Fukuoka 812-0011 (JP)
(74) Representative: HOFFMANN EITLE
(86) International application number: PCT/JP2000/002723
(87) International publication number: WO 2001/082640

(56) References cited:
- WO-A-99/44377
- JP-A- 9 172 669
- US-A- 5 608 779
- "Technical Specification Group Core Network;Out of Band Transcoder Control - Stage 2" 3GPP TSG_CN#6, [Online] 15 November 1999 (1999-11-15), XP002165319 Retrieved from the Internet: <URL:www.3gpp.org/ftp/TSG_CN/TSGN_06/tdocs /PDF/NP-99475.PDF> [retrieved on 2001-04-12]

## Description

This invention relates to a multipoint communication method and communication control device, and in particular relates to a multipoint communication method enabling communications between multiple points in a communication network, and a communication control device which realizes the above method.

WO 99/44377 describes a system for performing multi-party communication.

In recent years there has been growth in transmission methods which perform transmission more efficiently than previously by combining such diverse media as voice, data, and images into packets, and transmitting in packet units over the same transmission channels, as seen in ATM, frame relay, and the Internet. Particularly in audio transmission, by making the transmission rate variable depending on the transmission channel characteristics (network traffic and error rate) and on the sound source, efficient transmission methods are being realized. For example, a mobile core network and the AMR (Adaptive Multi Rate) method for voice encoding in this network which are being studied for adoption of IMT-2000 are representative of systems with the above features. The AMR method is a method which determines the encoding/decoding rate according to the error rate and circuit conditions.

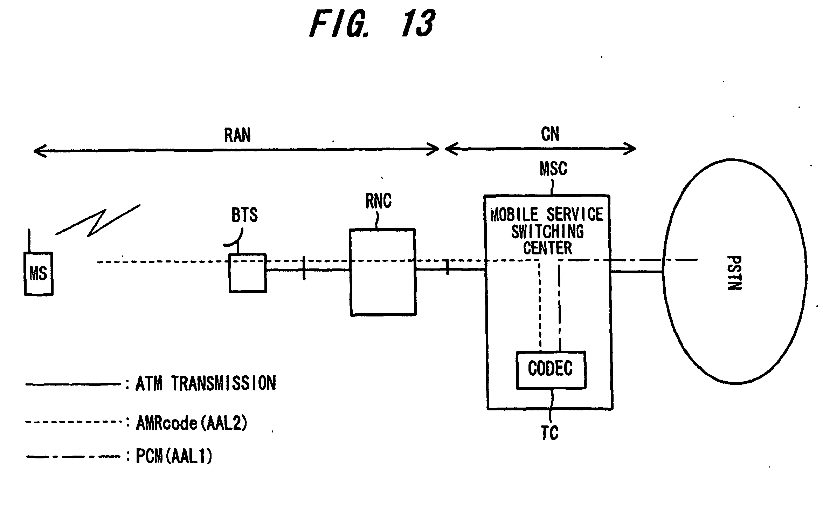

Fig. 13 is a diagram of the configuration of an IMT-2000 mobile core network, showing the case in which a mobile station MS communicates by voice with a telephone set, not shown, via a base station BTS, radio network controller RNC (Radio network controller), mobile service switching center MSC, and public switched telephone network PSTN. The mobile station MS incorporates a codec (coder/decoder, not shown); A/D-converted voice data is encoded at a rate indicated by the radio network controller RNC and transmitted, and encoded data which has been received is decoded into voice data, A/D-converted and output.

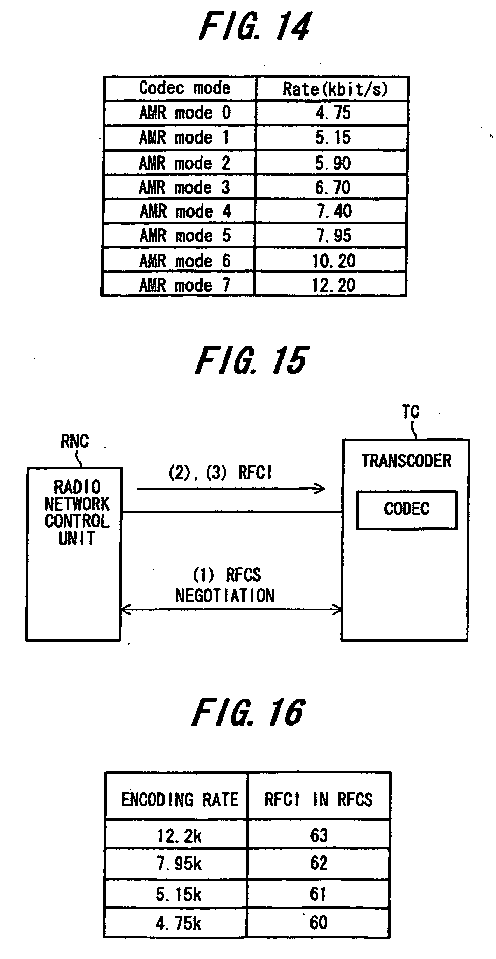

The radio access network RAN has decision rights for the AMR encoding rate; the radio network controller RNC issues a rate change protocol to the transcoder (TC) in the mobile switching station MSC on the core network (CN) side as necessary. As the AMR encoding rate, eight rates can be set in eight stages from 4.75 kbps to 12.20 kbps, as shown in Fig. 14; the encoding, rate is specified using a rate specifier (RFCI). In IMT-2000, a plurality of encoding rates which can be used by the radio network controller RNC itself in order to provide free selection rights within the radio access network RAN, and the encoding rate currently in use, can be determined. That is, as shown in Fig. 15, the radio network controller RNC (1) sends the plurality of correspondence relations between rates and RFCIs (RFCS; RFCI set) to the transcoder TC at the time of negotiation with the transcoder TC in advance of the initiation of communication; (2) then, inputs the rate specifier RFCI into the transcoder TC, and effects encoding/decoding at the encoding rate corresponding to the RFCI; and, (3) dynamically changes the RFCI to change the encoding rate during communication in response to the error rate or other circuit conditions. Fig. 16 is an example of rate control information RFCS sent to the transcoder TC from the radio network controller RNC during negotiation, and shows that for RFCI=60 to 63 the encoding rate is 4.75, 5.15, 7.95, and 12.2 kbps.

The mobile service switch center MSC, which comprises a switch (not shown) and numerous transcoders TC, switches a packet input from a radio network controller RNC as appropriate via a prescribed transcoder TC, or without passing through a transcoder TC, for transmission to a public switched telephone network PSTN, and transmits packets from the public switched telephone network PSTN to the radio network controller unit RNC either via a transcoder TC, or directly. The transcoders TC incorporate a codec, and encode the PCM voice data input from the public switched telephone network PSTN based on the encoding rate specified by the rate specifier RFCI from the radio network controller RNC, then transmit the data to the radio network controller unit RNC, as well as decoding the encoded PCM voice data input from a mobile station MS and transmitting the data to the public switched telephone network PSTN.

As described above, the mobile station MS encodes voice data at the specified rate and transmits the data, which is input to the mobile service switching center MSC via the base station BTS and radio network controller RNC. A transcoder TC within the mobile service switching center MSC decodes the encoded voice data into PCM voice data, based on the rate corresponding to the rate specifier RFCI specified by the radio network controller RNC, and transmits the data to the public switched telephone network PSTN. PCM voice data transmitted from the other-party telephone set is input to the mobile service switching center MSC via the public switched telephone network PSTN. A transcoder TC within the mobile service switching center MSC encodes PCM voice data based on the rate specified by the rate specifier RFCI, and transmits the data to the mobile station MS via the radio network controller RNC and base station BTS. The mobile station MS decodes the input encoded voice data based on the rate specified by the radio network controller RNC, and outputs the decoded voice signals from a speaker.

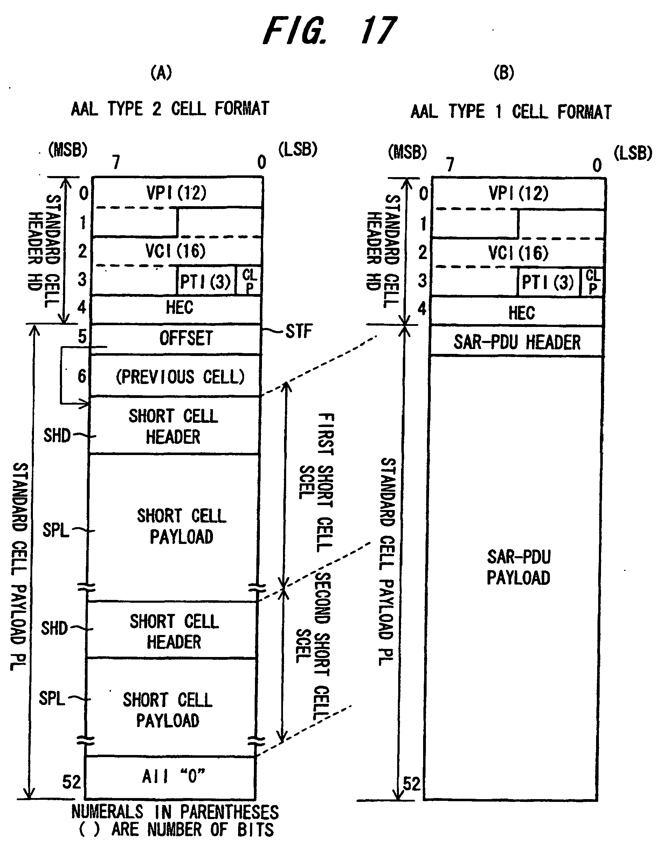

Communication between the base station BTS and the public switched telephone network PSTN relies for example on ATM transmission; of this, communication between the base station BTS and the mobile service switching center MSC relies on AAL type 2 ATM transmission, and that beyond the mobile service switching center MSC relies on AAL type 1 ATM transmission. In mobile communication, in order to make efficient use of the communication band, data is compressed as described above to encode data in a low-bit rate data format for transmission. When such low-bit rate information is embedded in the payload of an ATM cell, time is required for the payload of one ATM cell to be filled with data, so that data delays occur and the quality of communication may suffer. AAL type 2 is suitable for low bit rate data transmission, and can be used to reduce delays and to efficiently utilize bandwidth. Fig. 17(A) is a diagram explaining the AAL type 2 format. An AAL type 2 format cell comprises a standard cell header HD and a standard cell payload PL; in the standard cell payload PL, there are mapped a one-byte start field STF and one or more short cells SCEL. The start field STF comprises a pointer (offset value) indicating the leading position of the first short cell SCEL. Each short cell SCEL comprises a fixed-length short cell header SHD and a variable-length short cell payload SPL; in the short cell header SHD, (1) PDU type, (2) frame number, (3) frame quality classification (FQC), and (4) an RFCI or similar, not shown, are embedded; in the short cell payloads PDU are embedded the above low-bit rate information (voice data); and appropriate rate control information RFCS.

AAL type 1 is a transmission method which realizes a CBR (constant bit rate) service; the clock timing on the receiving side is matched with the timing of the user clock (for example, the 64 kbps of voice data) on the transmitting side, and by this means the voice information on the transmitting side can be reliably reproduced on the receiving side. Fig. 17(B) is a diagram explaining the AAL type 1 format; the 48-byte standard cell payload PL comprises a one-byte SAR-PDU header and a 47-byte SAR-PDU payload. The 47-byte SAR-PDU payload is used to transfer PCM voice data; the one-byte SAR-PDU header is used for transmission and reproduction of user clock timing information.

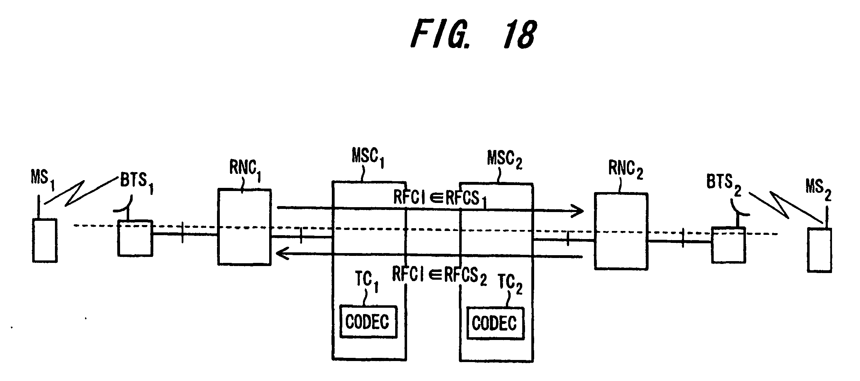

The above rate control procedure is generally performed when making a connection between the public network PSTN and the mobile station MOBILE SERVICE SWITCHING CENTER MSC (hereafter called an L-M connection). In a connection between mobile stations (hereafter an M-M connection), a transcoder-free operation (TrFO) such as that shown in Fig. 18, which does not pass through a transcoder TC, is executed, to prevent quality degradation due to tandem connections while also effectively utilizing the resources of transcoders TC. That is, when a connection is made via transcoders TC₁, TC₂ (tandem connection), (1) encoded voice data from a mobile station MS₁ is decoded into PCM voice data by a transcoder TC₁ and transmitted; (2) the PCM voice data is encoded by the transcoder TC₂; and (3) the encoded voice data is decoded into voice data by the mobile station MS₂ and output from a speaker. However, in this method data passes through a transcoder (codec) twice, so that quality is degraded, and in addition numerous transcoders are required. Hence in an M-M connection, communication is performed using the TrFO method, without passing through a codec, and moreover transcoders are used only for calls from the public network PSTN.

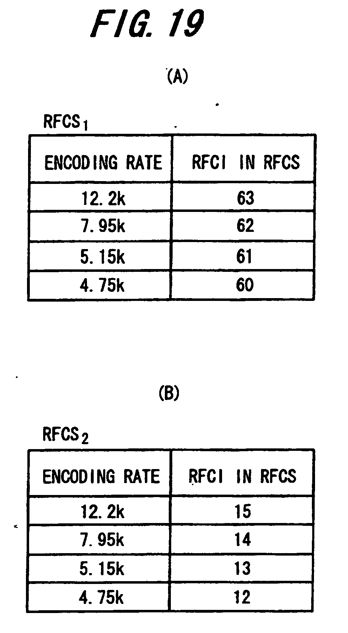

In this TrFO method, because radio network controllers RNC₁, RNC₂ set their own rate control information RFCS, they may have different rate control information RFCS in a radio access network RAN. For example, as shown in Fig. 19, the radio network controller RNC₁ sets the rate control information RFCS₁ shown in (A), and the radio network controller RNC₂ sets the rate control information RFCS₂ shown in (B). In this case, each of the mobile stations cannot recognize the encoding rate indicated by the rate specifier RFCI sent from the other-party mobile station, so that encoded voice data cannot be decoded. Hence in the TrFO method, in the initialization performed prior to the start of communication, it is agreed that (1) rate control information RFCS₁, RFCS₂ is exchanged between the radio network controllers RCN₁, RCN₂ over the radio access network RAN, and (2) a rate specifier RFCI based on the rate control information RFCS₁, RFCS₂ issued by each to the other is transmitted as rate information. Under these conditions, each of the mobile stations can decode the encoded voice data sent from the other-party mobile station.

For example, if a mobile station MS₁ has encoded voice data at a rate of 5.15 kbps, the radio network controller RNC₁ appends a rate specifier RFCI of 61 to this encoded voice data and transmits the data. When the radio network controller RNC₂ on the receiving side receives the rate specifier RFCI (=61) together with the encoded voice data, it refers to an RFCS₁ table and to the received RFCI (=61), and determines that the received encoded voice data was encoded at a rate of 5.15 kbps.

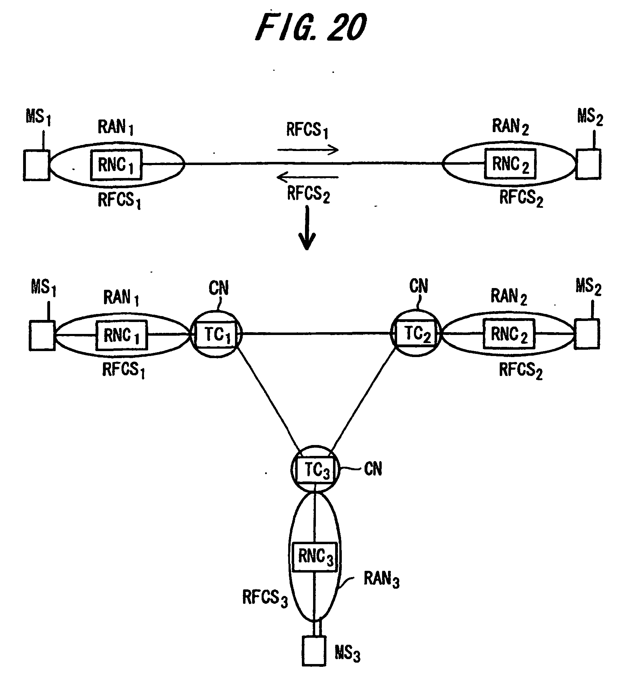

The TrFO method in the above network results in no problems for voice communication between two mobile stations MS₁ and MS₂ (two-point communication). However, when a new mobile station MS₃ is added to the two-point communication and an attempt is made at conversation among three mobile stations (three-point communication), the following problem arises. When realizing three-point communication, as shown in Fig. 20, the TrFO communication of the two-point communication that had been conducted up to that time must be interrupted (TrFO Break), and transcoders TC₁, TC₂ must be allocated to each of the mobile stations MS₁, MS₂, and a path inserted (the allocated transcoders TC₁, TC₂ are called "assigned TCs"). On the other hand, a transcoder TC₃ is also allocated to the newly participating mobile station MS₃, and three-point communication is conducted between the transcoders (Fig. 20). That is, the transcoder TC₁ decodes the encoded voice data sent from the transcoders TC₂ and TC₃, synthesizes the decoded voice data, and encodes the synthesized voice data for transmission to the mobile station MS₁. Similarly, the transcoders TC₂ and TC₃ decode the encoded voice data sent from each of the other two transcoders, synthesize the decoded voice data, encode the synthesized voice data, and transmit the encoded voice data to the mobile stations MS₂ and MS₃ to conduct three-point communication.

Here, the fact that the rate control information RFCS₁ to RFCS₃ is that of the radio access networks RAN₁ to RAN₃, and that during TrFO communication the core network CN does not possess this information, constitutes a problem. Consequently, the assigned TC₁ and TC₂ which are started upon a TrFO break cannot be provided with rate control information RFCS from the core network CN, so that if rate control information is not provided by some means, the assigned TC₁ and TC₂ will not have the rate control information RFCS₁ and RFCS₂, so that normal encoding/decoding cannot be performed. In light of this, when making a transition from two-point communication to three-point communication, it is necessary that negotiation of the rate control information RFCS₁ (RFCS₂) be performed between the radio network controller RNC₁ (RNC₂) and the assigned TC₁ (TC₂), by means of an initialization procedure similar to that used upon L-M connection, and moreover the RFCS₁ and RFCS₂ must be mutually negotiated between the assigned TC₁ and TC₂. However, because this negotiation takes time, a momentary interruption occurs in the voice communication (two-point communication) that had been in progress over the M-M connection. Further, in multipoint communication relying on transcoders, overhead relating to TC resources and to communication bandwidth between TCs occurs.

In light of the above, an object of the present invention is to resolve the above problems, and to enable transition to (m+1)-point communication without causing a momentary interruption in the conversation over an existing m-point communication.

According to a first aspect of the invention, there is provided a multipoint communication method, in which voice communication takes place among mobile stations via communication control devices, having a transcoder provided with a codec which performs encoding and decoding of voice signals, and a radio network controller provided with a rate control unit which determines the encoding rate in the codec and indicates the encoding rate to the transcoder using the unit's own rate specifier; characterized in that: in two-point communication in which voice communication takes place between two mobile stations, connecting a radio network controller of the communication control device of one of the points to a radio network controller of the communication control device of the other point, without passing through a transcoder, exchanging between the two radio network controller rate control information, which specifies correspondence relations between rate specifiers and encoding rates, and replacing under control of a radio network controller a rate specifier which is sent by the radio network controller at the other point together with voice data by a rate specifier determined by referring to said rate control information, and transmitting the voice data with said determined rate specifier to the mobile station; when making a transition from two-point communication to three-point communication, connecting radio network controllers in the communication control devices at each of the three points to transcoders and establishing communication paths between the transcoders, and continuing the two-point communication by transmitting the encoded voice data and rate specifier output from the radio network controller at one point in said two-point communication through transcoders, to the radio network controller of the other point of said two-point communication, and moreover transmitting the encoded voice data and rate specifier sent from the radio network controller of the other point to the radio network controller of said one point of said two-point communication, through transcoders; in parallel with said transition control, making the transcoders at all points to acquire the rate control information for all points to shift to three-point communication; in the transcoders at each point, transmitting encoded voice data for transmission which is made in duplicate to the transcoders of a plurality of other points; and then in the transcoders at each point, replacing a rate specifier sent from other points together with encoded voice data by a rate specifier which is determined by referring to said rate control information and transmitting the voice data with this specifier to the mobile station, or decoding each encoded voice data from other points, encoding the decoded voice data at a permitted encoding rate, appending a rate specifier indicating the encoding rate to the encoded voice data, and transmitting the encoded voice data to the mobile station.

According to a second aspect of the invention, there is provided a communication control device, comprising: a transcoder provided with a codec arranged to encode and decode voice signals; a radio network controller provided with a rate control unit arranged to determine the encoding rate of the codec and to indicate the encoding rate to the transcoder using the unit's own rate specifier; and a switching unit arranged to switch routes, characterized in that: said radio network controller comprises means to negotiate rate control information, which specifies correspondence relations between rate specifiers and encoding rates, with the transcoder in the event of multipoint communication; said transcoder comprises: means to perform negotiation of rate control information with the transcoders of other points in the event of three-point communication; means to accumulate rate control information for all points; means to create and broadcast copies of encoded voice data to all other points; means to receive encoded voice data from other points; a codec arranged to decode encoded voice data received from other points, at an encoding rate indicated by a rate specifier sent together with the encoded voice data, and to encode decoded voice data at a permitted encoding rate; and a transmission unit arranged to append a rate specifier corresponding to said encoding rate to encoded voice data output from the codec and transmit the encoded voice data with the rate specifier, or to replace the rate specifier of said received encoded voice data by a rate specifier which is determined by referring to said rate control information and transmitting the received encoded data with the new rate specifier, and the switching unit being arranged, while maintaining two-point communication, to establish a communication path between the radio network controller and the transcoder and communication paths between the transcoder and the transcoders of other points; the transcoder arranged to acquire rate control information for all points via said communication paths; and, in three-point communication, during transmission, the transcoder being arranged to replicate encoded voice data and transmit copies to the transcoders at other points, and during reception, the transcoder being arranged to replace the rate specifier sent together with encoded voice data by a rate specifier which is determined by referring to said rate control information, and to transmit the encoded voice data with said rate specifier to the mobile station, or to decode each of the received encoded voice data, to encode the decoded voice data at a permitted encoding rate, to append a rate specifier indicating the encoding rate to the encoded voice data, and to transmit the encoded voice data with said rate specifier to the mobile station.

For a better understanding of the invention and to show how the same may be carried into effect, reference will now be made, by way of example, to the accompanying drawings, in which:
Fig. 1 is a diagram of the overall configuration of a network;
Fig. 2 is a diagram of the configuration of a mobile service switching center;
Fig. 3 is a diagram of the configuration of a radio network controller (RNC);
Fig. 4 is a figure explaining the rate control information RFCS and substitution of a rate specifier RFCI;
Fig. 5 shows the configuration of the payload of a packet (cell) for voice data transmission;
Fig. 6 shows the configuration of the payload of a packet (cell) for transmission of rate control information RFCS;
Fig. 7 shows the configuration of the payload of a packet (cell) for notification of normal reception/abnormal reception of rate control information RFCS;
Fig. 8 is a diagram of the configuration of a transcoder;
Fig. 9 is a figure explaining the procedure for controlling transition from two-person voice communication to three-person voice communication of this invention;
Fig. 10 is a first figure explaining control of the transition from two-person voice communication to three-person voice communication;
Fig. 11 is a second figure explaining control of the transition from two-person voice communication to three-person voice communication;
Fig. 12 is a figure explaining control of the transition from three-person voice communication to four-person voice communication;
Fig. 13 is a diagram of the configuration of an IMT-2000 mobile core network;
Fig. 14 is a figure explaining AMR rates;
Fig. 15 is a figure explaining codec rate control;
Fig. 16 is a figure explaining RFCS (rate control information);
Fig. 17 shows the AAL type 1 and AAL type 2 cell formats;
Fig. 18 is a figure explaining two-point communication using the TrFO method;
Fig. 19 is a figure explaining the RFCS at each point in two-point communication; and,
Fig. 20 is a figure explaining problems with the prior art in a transition from two-point communication to three-point communication.

In the present system, a communication control device, comprising a transcoder provided with a codec, a rate control unit which controls the encoding rate of the codec and also specifies the encoding rate for the transcoder using a rate specifier, and a switching unit which switches channels, is provided at different points, and multipoint communication among mobile stations is performed via these communication control devices. Among multipoint communications, three-point communication is realized by making a transition from two-point communication to three-point communication, and in general (m+1)-point communication is realized by making a transition from m-point communication to (m+1)-point communication.

In two-point communication, the rate control unit of the communication control device at one of the points is connected to the rate control unit of the communication control device at the other point, without passing through the transcoder, and the rate control information RFCS which is the correspondence relation between rate specifiers and encoding rates is exchanged between the two; in one rate control unit, the rate specifier RFCI which is sent together with voice data from the rate control unit at the other point is compared with the above rate control information, and is replaced with the unit's own rate specifier for transmission to the mobile station. Through such two-point communication, the number of decoding/encoding operations can be reduced, and quality degradation can be prevented.

When making a transition from two-point communication to three-point communication, the switching unit connects the rate control unit to the transcoder in the communication control devices of each of the three points, and also establishes communication paths between each of the transcoders. The transcoder of one of the points which had been engaged in two-point communication transmits the encoded voice data output from the rate control unit and the rate specifier to the rate control unit at the other point of the two-point communication, and moreover inputs the encoded voice data and rate specifier sent from the rate control unit of the other point to the rate control unit of the first point of the two-point communication; each of the rate control units continue control in the two-point communication. By this means, while maintaining two-point communication, preparations for three-point communication can be performed. In this state, rate control information for all points is acquired by each of the transcoders at the three points, and a transition to three-point communication is made.

In three-point communication, the transcoders at each point: (1) during transmission, replicate encoded voice data and transmit the data to the transcoders of a plurality of other points, and (2) during reception, use the above rate control information to substitute their own rate specifiers for the rate specifiers sent together with encoded voice data from transcoders at other points, and transmit to the mobile station; or, decode the encoded voice data, encode the decoded voice data at a permitted encoding rate, append the rate specifier indicating the encoding rate to the encoded voice data, and transmit the result to the mobile station.

As in the above, when making a transition from two-point communication to three-point communication, preparations for three-point communication are made while maintaining two-point communication, and when preparations have been completed, the transition to three-point communication is made, so that momentary interruptions in conversation can be eliminated.

Further, when encoded voice data is received from only one other point, there is no need to perform decoding/encoding in the transcoder, so that voice quality can be maintained; however, when encoded voice data is received simultaneously from two or more other points, by performing decoding/synthesis/encoding of each, the voices of a plurality of speakers can be heard simultaneously.

Also, even when encoded voice data is received from only one other point, if the rate indicated by the rate specifier sent together with the encoded voice data is not permitted by the mobile station, decoding is performed using the rate in question, the decoded voice signals are encoded at a permitted encoding rate, and a rate specifier indicating the encoding rate is appended and sent together with the encoded voice data to the mobile station. By this means, the mobile station can reliably decode and output the received encoded voice data.

Further, by transmitting the encoded voice data and rate control information over the same channel (in-channel control), each of the transcoders can be made to acquire the rate control information by means of simple control, while maintaining two-point communication.

### (A) Overall Network Configuration

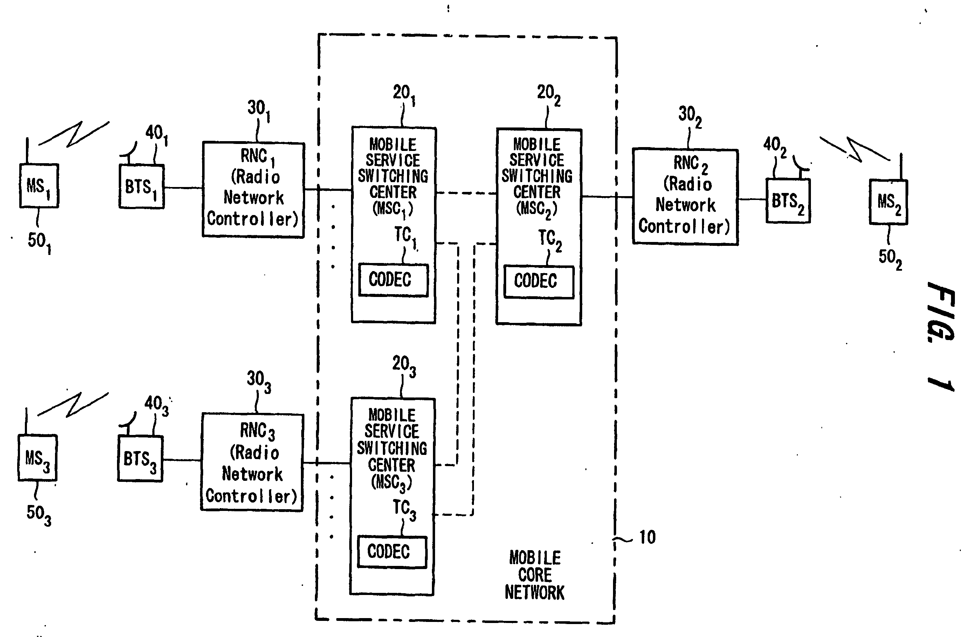

Fig. 1 is a diagram of the overall configuration of a network; numerous (in the figure, three) mobile service switching centers (MSC₁ to MSC₃) 20₁ to 20₃ are provided in the mobile core network 10. Numerous (in the figure, one) radio network controller (RNC₁ to RNC₃) 30₁ to 30₃ are connected to each mobile service switching center 20₁ to 20₃, and each radio network controller 30₁ to 30₃ is connected to a base station (BTS₁ to BTS₃) 40₁ to 40₃. Each of the base stations 40₁ to 40₃ conducts bidirectional radio communication with the mobile stations (MS₁ to MS₃) 50₁ to 50₃ within the radio zone managed by the base station.

### (B) Mobile Service Switching Center (MSC)

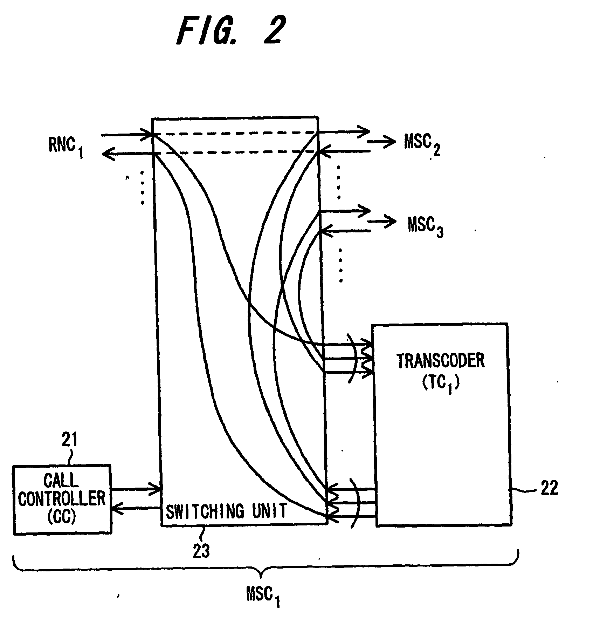

Each of the mobile service switching centers 20₁ to 20₃ has the same configuration; for example, the mobile service switching center 20₁ has a call controller 21, a plurality (only one is shown) of transcoders (TC₁: transcoder) 22, and a switching unit 23, as shown in Fig. 2. The transcoder 22 performs transcoding processing, and as explained below, incorporates a codec which performs encoding and decoding of voice signals. The switching unit 23 switches encoded voice data arriving from an uplink input route connected to the radio network controller (RNC₁) 30₁, under control of the call controller 21, to a prescribed uplink output route, either through or not through a transcoder (TC₁) 22, for transmission to other mobile service switching centers MSC₂, MSC₃. Also, the switching unit 23 switches the encoded voice data input via the downlink input route from the other mobile service switching centers MSC₂, MSC₃ to a prescribed downlink output route connected to the radio network controller (RNC₁) 30₁, either through or not through a transcoder (TC₁) 22.

### (C) Radio network controller (RNC)

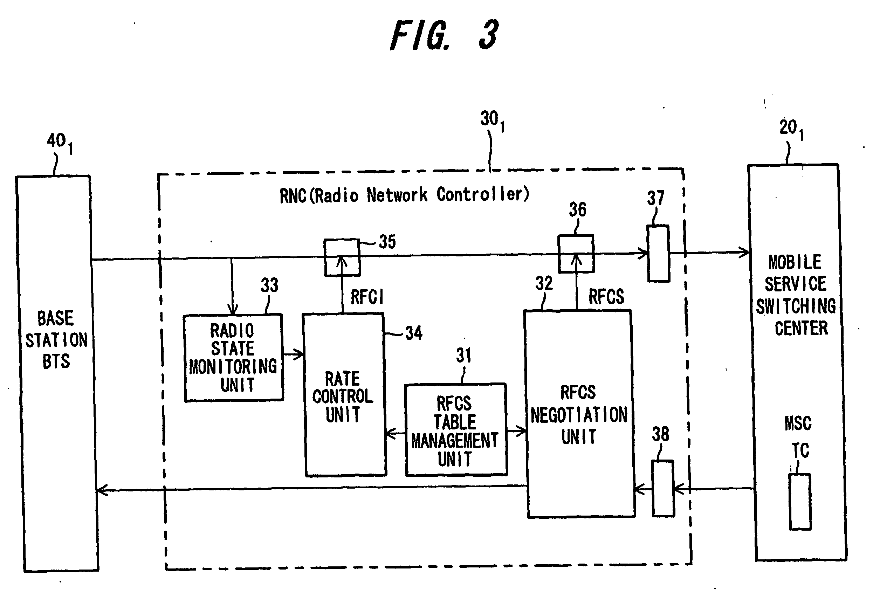

The radio network controller (RNCs) 30₁ to 30₃ determine the encoding rates in the transcoders TC₁ to TC₃, and also indicate the encoding rate by means of a rate specifier RFCI. As shown in Fig. 3, the radio network controller (RNC₁) 30₁ comprises an RFCS table management unit 31, which maintains and manages a correspondence relation between encoding rates and rate specifiers RFCI (rate control information RFCS; RFCI set); an RFCS negotiation unit 32, which performs negotiation of the rate control information RFCS with other units at the time of communication; a state monitoring unit 33, which monitors the state (error rate and similar) of the radio unit; a rate control unit 34, which determines the encoding rate based on the error occurrence state of the radio unit, and transmits a rate specifier RFCI; an RFCI insertion unit 35, which inserts the rate specifier RFCI in a prescribed position of the packet (cell); an RFCS insertion unit 36, which inserts the rate control information RFCS in a prescribed position of the packet (cell); a packet transmission unit 37; and a packet reception unit 38.

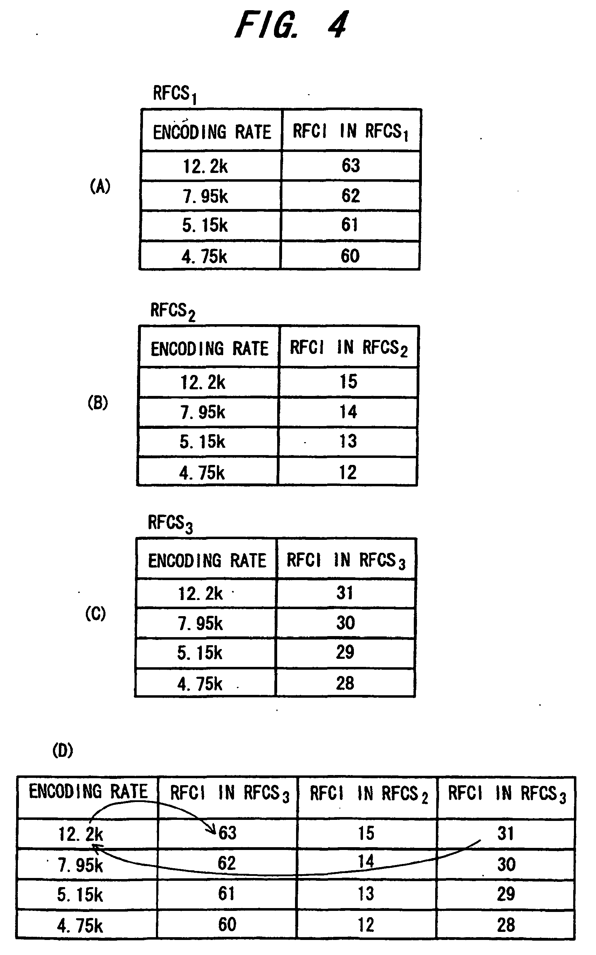

The table of rate control information RFCS set in the RFCS table management unit 31 may differ for each radio network controller RNC. For example, as shown in Fig. 4, the rate control information RFCS₁ of (A) is set by the radio network controller 30₁, the rate control information RFCS₂ of (B) is set by the radio network controller 30₂, and the rate control information RFCS₃ of (C) is set by the radio network controller 30₃. The rate control unit 34 determines the encoding rate based on the radio state (error rate), and transmits a rate specifier RFCI corresponding to the encoding rate. For example, if numerous errors occur, the encoding rate is set such that the compression ratio is low; if there are no errors, the encoding rate is determined such that the compression rate is increased, and a rate specifier RFCI corresponding to this encoding rate is transmitted.

### (D) Frame Configuration

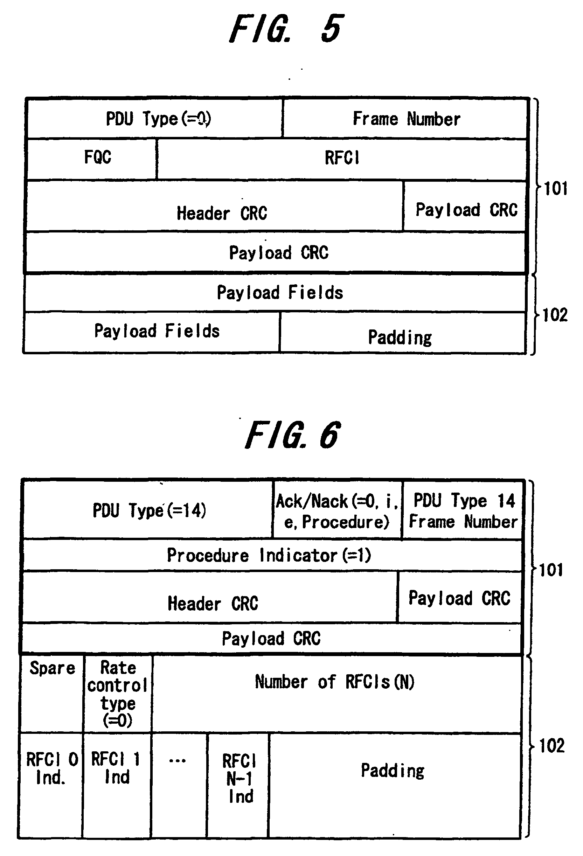

Encoded voice data is mapped to, for example, an AAL type 2 cell and transmitted; similarly, a rate specifier RFCI and rate control information RFCS are also mapped to appropriate places in a cell and transmitted. Fig. 5 shows the configuration of the payload of a cell for encoded voice data transmission, which comprises a short header portion 101 and a short cell payload portion 102; the items mapped to the header portion 101 are (1) the PDU type (=0), (2) the frame number (cell number), (3) the FQC (frame quality classification), (4) the rate specifier RFCI, (5) the header portion CRC, and (6) the payload portion CRC, while the encoded voice data is mapped to the payload portion 102.

Fig. 6 shows the configuration of the payload of a cell for transmission of rate control information RFCS; items mapped to the short cell header portion 101 are (1) the PDU type (=14), (2) an ACK/NACK field, (3) a frame number, (4) a procedure indicator, (5) a header portion CRC, and (6) a payload portion CRC. The rate control information RFCS is mapped to the payload portion 102.

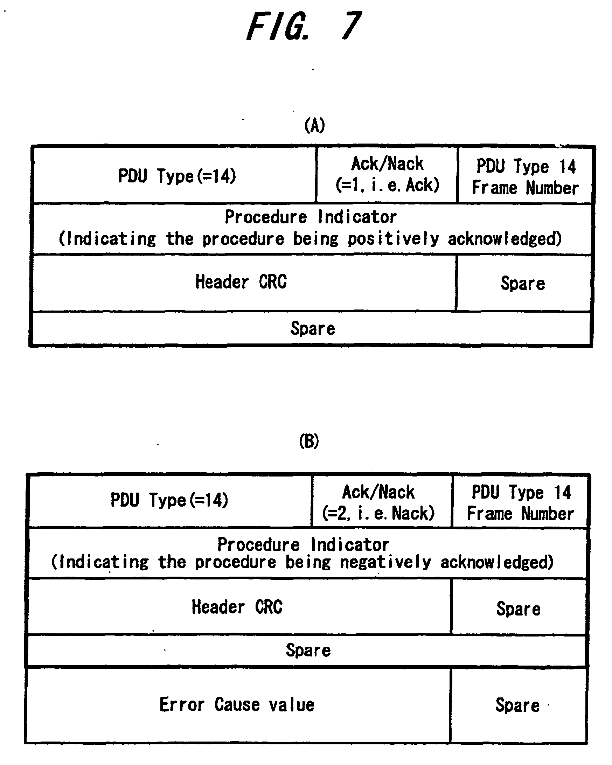

In Fig. 7, (A) is a diagram of the configuration of the header portion providing notification of the normal reception of rate control information RFCS, with ACK/NACK=1; (B) is the configuration of the header portion providing notification of abnormal reception of the rate control information RFCS, with ACK/NACK=2, and the error factor embedded in the payload portion.

From the above, a radio network controller RCN can use the same channel used for encoded voice data to negotiate rate control information RFCS with a transcoder or other unit. Also, by mapping encoded voice data to the padding field in Fig. 6, negotiation can be performed using a packet type in which encoded voice data and rate control information are included in the same packet.

### (E) Transcoder (TC)

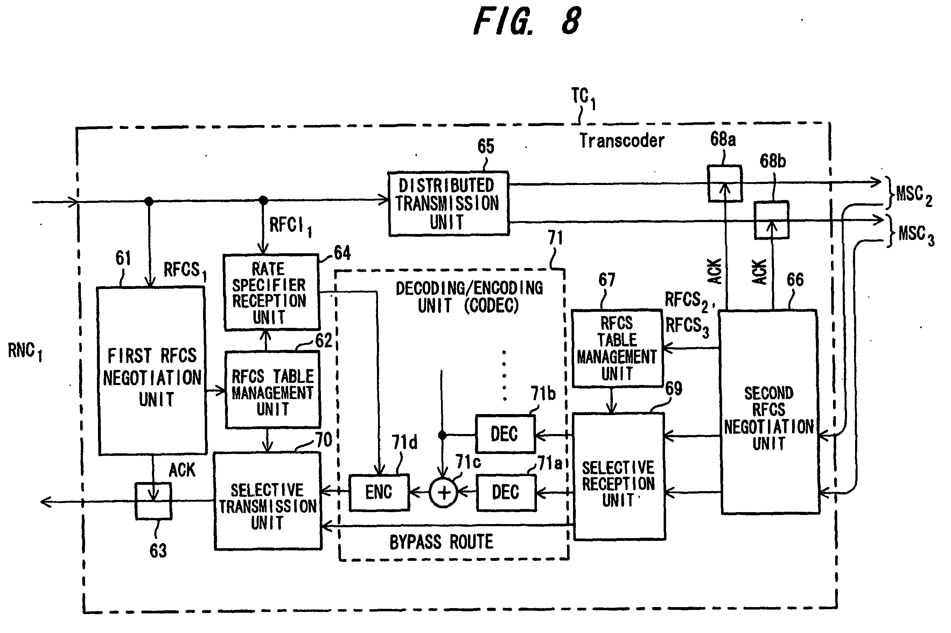

Fig. 8 is a diagram of the configuration of a transcoder provided in a mobile service switching center; the transcoder TC₁ within the mobile service switching center MSC₁ is shown, but other transcoders have the same configuration. The first RFCS negotiation unit 61 performs negotiation with the radio network controller (RNC₁) 30₁ at the time of multipoint communication, acquires rate control information RFCS₁ ((A) in Fig. 4), and stores this rate control information (RFCS₁) in the RFCS table management unit 62. The ACK/NACK insertion unit 63 inserts ACK/NACK information, indicating normal or abnormal reception of the rate control information (RFCS₁), into an appropriate place in the downlink cell, which is transmitted. The rate specifier reception unit 64 extracts the rate specifier RFCI₁ sent from the radio network controller (RNC₁) 30, references the rate control information (RFCS₁) stored in the RFCS table management unit 62, determines the encoding rate specified by the rate specifier RFCI₁, and inputs this to the codec encoder, described below.

The distributed communication unit 65 replicates and broadcasts encoded voice data to multiple points in multipoint communication (for example, three-point communication).

The second RFCS negotiation unit 66 performs negotiation among the transcoders TC₂, TC₃ of the mobile service switching centers MSC₂, MSC₃ in the event of multipoint communication, acquires rate control information RFCS₂, RFCS₃ ((B),(C) in Fig. 4), and stores the rate control information (RFCS₂, RFCS₃) in the RFCS table management unit 67. The ACK/NACK insertion units 68a, 68b insert ACK/NACK information, indicating normal or abnormal reception of the rate control information (RFCS₂, RFCS₃), in an appropriate place in the uplink cell, and transmits the data. The selective reception unit 69 receives encoded voice data from each of the points, stores the data in a data buffer, and selects the output destination according to each of the following cases:
(1) when encoded voice data is received from only one other point, and the encoding rate indicated by the rate specifier sent together with the encoded voice data is included in the rate control information RFCS₁;
(2) when encoded voice data is received from only one other point, and the encoding rate indicated by the rate specifier sent together with the encoded voice data is not included in the rate control information RFCS₁; and,
(3) when encoded voice data is received simultaneously from two or more other points.

Even in multipoint communications, often only a single person is speaking at any one time; if the VOX transmission method, in which signals are transmitted only when there is sound, is used, only voice data from the mobile station of the speaker is stored in the received data buffer. Hence it is possible to judge whether encoded voice data is being received only from one other point, or whether encoded voice data is being received simultaneously from two or more other points, according to whether data is being stored in each of the received data buffers. The selective reception unit 69 and selective transmission unit 70 can reference the table management units 62, 67.

Given the above, in case (1), the selective reception unit 69 transmits the rate specifier RFCI₂ (or RFCI₃) together with the encoded voice data to the selective transmission unit 70. The selective transmission unit 70 determines the encoding rate indicated by the rate specifier RFCI₂ (or RFCI₃) sent together with encoded voice data, referring to the rate control information RFCS₂ (or RFCS₃), determines the rate specifier RFCI, corresponding to this encoding rate, referring to the rate control information RFCS₁, appends this rate specifier to the encoded voice data, and transmits the data to the mobile station. For example, if the rate specifier RFCI₃=31 is appended to the encoded voice data received from the transcoder TC₃ (cf. Fig. 4(C)), the selective reception unit 69 refers to the rate control information RFCS₃, and judges that the encoding rate is 12.2 kbps. Then, the selective transmission unit 70 refers to the rate control information RFCS₁ to determine that the rate specifier corresponding to an encoding rate of 12.2 kbps is RFCI₁=63, and appends this rate specifier to the encoded voice data, which is transmitted to the mobile station.

In the case of (2), the selective reception unit 69 determines the encoding rate indicated by the rate specifier RFCI₂ (or RFCI₃) sent together with encoded voice data, referring to the rate control information RFCS₂ (or RFCS₃), and inputs the encoding rate and the encoded voice data into the first decoder 71a of the codec 71. The decoder 71a decodes the encoded voice data based on the encoding rate, and inputs the voice data obtained to the encoder 71d. The encoder 71d encodes the voice data based on the encoding rate indicated by the rate specifier reception unit 64, and inputs the encoded voice data to the selective transmission unit 70. The selective transmission unit 70 appends the rate specifier RFCI₁ indicated by the radio network controller RNC₁ to the encoded voice data input from the encoder, and outputs the result.

In the case of (3), the selective reception unit 69 determines the encoding rates indicated by the rate specifiers RFCI₂, RFCI₃ sent together with the respective encoded voice data, referring to the rate control information RFCS₂, RFCS₃, and inputs the encoding rates and the encoded voice data to the respective first and second decoders 71a, 71b of the codec 71. The first and second decoders 71a, 71b decode the encoded voice data based on the respective encoding rates, and the adder 71c synthesizes the voice data thus obtained for input to the encoder 71d. The encoder 71d encodes the synthesized voice data based on the encoding rate indicated by the rate specifier reception unit 64, and inputs the encoded voice data to the selective transmission unit 70. The selective transmission unit 70 appends the rate specifier RFCI indicated by the radio network controller RNC₁ to the input encoded voice data, and outputs the result.

### (F) Control for Transition from Two-Person Voice Communication to Three-Person Voice Communication

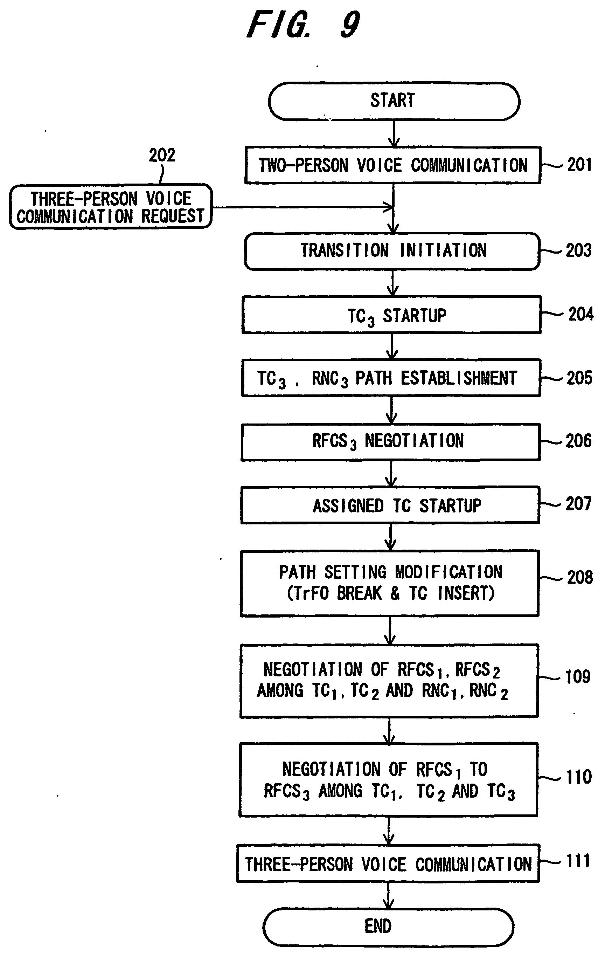

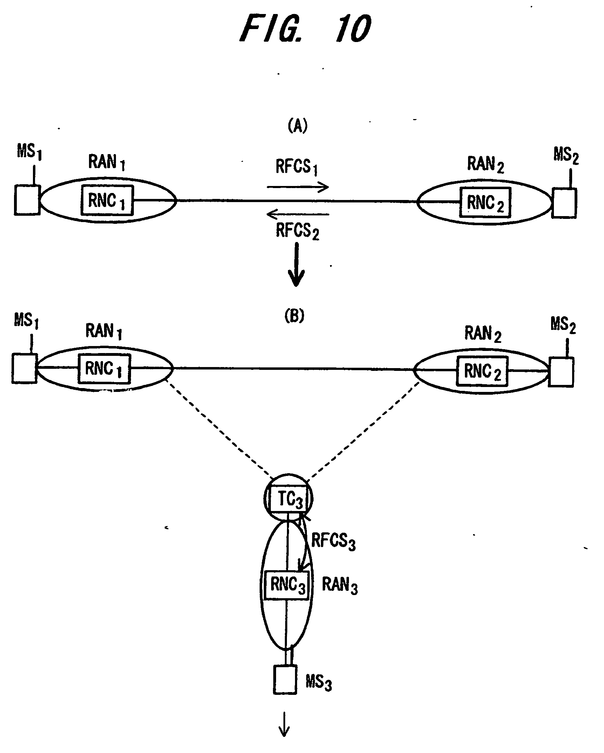

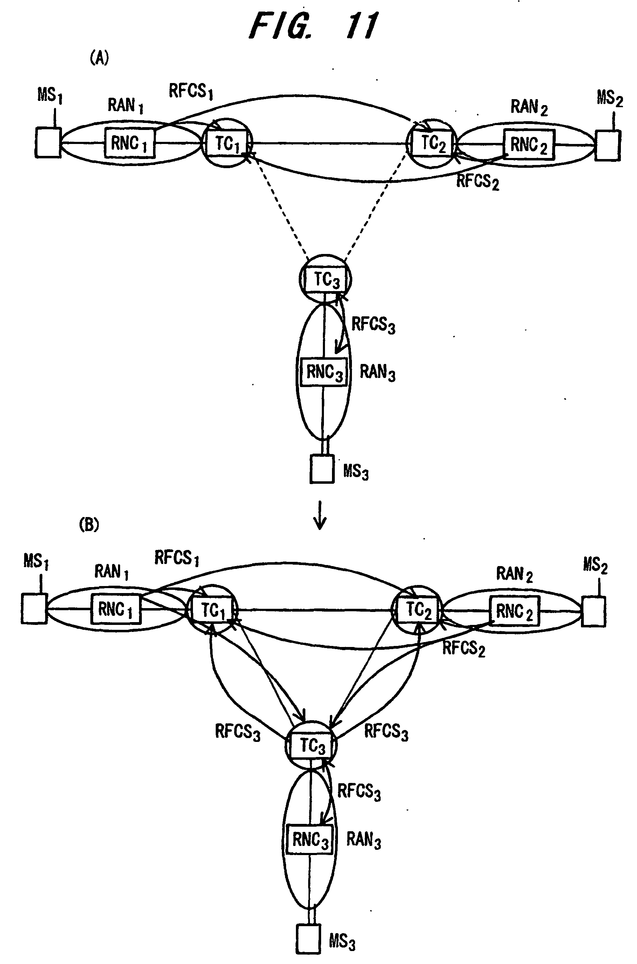

Fig. 9 shows the processing flow of control in a transition from two-person voice communication to three-person voice communication; Figs. 10 and 11 explain transition control. Here three-person voice control is given as an example; control for voice communication involving a greater number of points is discussed later.

In order to realize three-person communication (three-point communication) among the mobile stations MS₁ to MS₃, first an M-M communication mode between two persons, such as shown in (A) of Fig. 10, is created (two-point communication, step 201). At this time, voice communication is conducted by the TrFO method, which does not use the transcoders TC of the radio communication network which is the core network. When making a transition from two-person communication to three-person communication, the mobile station MS₃ of the third. person ((B) of Fig. 10) first calls one of the mobile stations MS₁, MS₂ of the two persons already engaged in voice communication (step 202). The call controller 21 of the mobile service switching center 20₁ of the called party recognizes the three-person communication request and issues permission for three-person communication, and subsequently the control units of each mobile service switching center (called an upper-level call control device) cooperate to initiate processing for a transition to three-person communication (step 203).

First, the upper-level call control device starts the transcoder TC₃ allocated to the newly participating mobile station MS₃ (step 204). That is, (1) the transmission origin address RNC₃ₒᵤₜ of encoded voice data from the radio network controller RNC₃, received by the distributed communication unit 65 (Fig. 8) of the transcoder TC₃, (2) the transmission origin addresses of copies (the two transcoders TC₁ᵢₙ, TC₂₁ₙ), (3) the transmission origin addresses (the two address TC₁ₒᵤₜ, TC₂ₒᵤₜ) of encoded voice data from the transcoders TC₁, TC₂ received by the selective reception unit 69, and (4) the transmission origin address RNC₃ᵢₙ for transmission to the radio network controller RNC₃ by the selective transmission unit 70, are provided, and three-person communication (communication parameter N=3) is started. The communication parameter N=2 corresponds to normal two-person communication. At this time, because the transcoder TC₃ is an assigned TC on the new participant side, the upper-level call control device notifies the transcoder TC₃ of the fact that negotiation of the rate control information RFCS among TCs is necessary, as described below, by means of a startup parameter.

Next, a path between the radio network controller RNC₃ and the transcoder TC₃ is established (step 205), and negotiation between them of the rate control information RFCS₃ is performed (step 206). On acquiring the rate control information RFCS₃, the transcoder TC₃ transmits the rate control information RFCS₃ to the transcoders TC₁, TC₂ at the other two points, and continues processing to notify these transcoders of the rate control information RFCS₃ until an ACK (acknowledge) is returned.

On the other hand, the path settings of the M-M call (two-point communication) which has been in progress are modified from TrFO communication mode to transcoder TC connection mode. The following processing is necessary for both the radio network controllers RNC₁ and RNC₂, but to simplify the explanation, processing by the radio network controller RNC₁ is used as an example.

The assigned TC₁ ((A) of Fig. 11) to which to connect the radio network controller RNC₁ is determined (resource hunt), and similarly to the case of the newly participating transcoder TC₃, (1) the transmission origin address RNC₁ₒᵤₜ of encoded voice data from the radio network controller RNC₁, received by the distributed communication unit 65 of the transcoder TC₁, (2) the transmission origin addresses of copies (the two transcoders TC₂ᵢₙ, TC₃ᵢₙ), (3) the transmission origin addresses of encoded voice data from the transcoders TC₂, TC₃ received by the selective reception unit 69 (TC₂ₒᵤₜ, TC₃ₒᵤₜ), and (4) the transmission origin address RNC₁ᵢₙ for transmission to the radio network controller RNC₁ by the selective transmission unit 70, are provided, and three-person communication (communication parameter N=3) is started (step 207).

After starting the assigned TC₁ and TC₂, the path settings in the network are modified (step 208). By this means, a TrFO break and TC insert are performed. The transmission unit 37 (Fig. 3) and reception unit 38 of the radio network controller RNC₁ changes the setting from the address of the radio network controller RNC₂ with which it had been communicating to the address of the assigned TC₁, and executes a TrFO break. At this time, the assigned TC₁ and assigned TC₂ have already been started, and the path already established, so that after the TrFO break, a TC insert is immediately executed, and for the following reason the path between the two points previously in communication (the M-M call) is instantaneously established, even after a TrFO break. By this means, the radio network controller RNC₁ can continue control operations similar to those of the previous two-person communication.

As a result of a TrFO break/TC insert, encoded voice data from the mobile station MS₁ is input without modification to the assigned TC₁ via the radio network controller RNC₁. The distributed communication unit 65 (Fig. 8) of the assigned TC₁ copies the encoded voice data from the radio network controller RNC₁, and transmits this data to the transcoders TC₂ and TC₃. On receiving this data, the selective reception unit 69 of the assigned TC₂ at the communication destination for two-point communication transmits the encoded voice data to the selective transmission unit 70, bypassing the codec 71, and the selective transmission unit 70 sends the encoded voice data without modification to the radio network controller RNC₂. That is, even if the transcoders TC₁, TC₂ are inserted in the path, the same encoded voice data as previously can be transmitted and received between the radio network controllers RNC₁ and RNC₂. Subsequently, the radio network controllers RNC₁, RNC₂ execute control similar to that of the previous two-person communication (M-M call), and continue two-person communication. Thus even if a TC insert is executed after a TrFO break, two-point communication can be continued as before, without a momentary interruption of the existing M-M call.

When the path settings are changed and notification of a TrFO break is issued, the radio network controller RNC₁ must transmit its own rate control information RFCS₁ to the transcoder TC₂ by means of negotiation prior to a, transition to three-person communication ((A) of Fig. 11). This is because while in three-person communication, the selective transmission unit 70 of the transcoder TC₂ must convert the rate specifier RFCI₁ received together with encoded voice data from the transcoder TC₁ into a rate specifier RFCI₂ according to the rate control information RFCS₂, rather than the rate control information RFCS₁. Similarly, when the path settings are changed and notification of a TrFO break is issued, the radio network controller RNC₂ must transmit its own rate control information RFCS₂ to the transcoder TC₁ by means of negotiation prior to a transition to three-person communication.

Negotiation of the rate control information RFCS is performed over the same channel as the encoded voice data channel (in-channel method), and on receiving the rate control information RFCS, the assigned TC returns an acknowledge signal to the radio network controller RNC which is the transmission origin. Through this in-channel method, procedures to set and release the negotiation channel can be eliminated. The rate change protocol between the radio network controller RNC₁ and transcoder TC₁ conforms to the rate control information RFCS₁. Consequently the transcoder TC₁ must know not only the rate control information RFCS₂, but the rate control information RFCS₁ as well. By means of the in-channel method, the radio network controller RNC₁ can transmit the rate control information RFCS₁ to the transcoder TC₁ simply through negotiation. As described with reference to Fig. 5 to Fig. 7, as the data packet (cell) for negotiation, a packet type (Fig. 6) different from that of encoded voice data (Fig. 5) is sent, so that the two can be discriminated. A method can also be employed involving mapping for transmission together with a voice data packet. The above constitutes step 109.

Next, rate control information RFCS₁ to RFCS₃ is negotiated between the newly participating side (RNC₃, TC₃) and the transcoders TC₁, TC₂ at the other points (step 110). As already explained, when negotiation of the rate control information RFCS₃ between the transcoder TC₃ and radio network controller RNC₃ is completed. (step 206), because the fact that negotiation between TCs is necessary is specified at startup, the transcoder TC₃ initiates negotiation of rate control information RFCS₁ to RFCS₃ with the transcoder TC₁ and transcoder TC₂. When the opposing transcoders TC₁, TC₂ are started, and a path between the transcoders TC is established, rate control information is transmitted and received, negotiation between the transcoders is completed, and subsequently negotiation between transcoders and radio network controllers is also completed ((B) of Fig. 11).

To summarize the above, the transcoder is activated by the initiation of negotiation of the rate control information with the radio network controller, and negotiation of rate control information between transcoders is initiated. And, excitation upon the completion of negotiation of rate control information between transcoders causes the negotiation of rate control information between radio network controllers to be completed. When the above negotiation of rate control information RFCS₁ to RFCS₃ is completed, voice communication with a newly participating mobile station MS₃ (three-person voice communication), in addition to the voice communication already established between transcoders TC₁, and TC₂, is realized (step 111).

That is, the distributed transmission unit 65 (Fig. 8) of the transcoder TC₃ creates two replicas of the encoded voice data packet received from the radio network controller RNC₃, adds to the packets the addresses of the opposing transcoders. TC₁, TC₂ provided in the startup parameters, and transmits the packets. Due to the data path settings in the system, these packets are sent tp the respective transcoders TC₁, TC₂. On the other hand, data packets from the transcoders TC₁, TC₂ are arrived in the buffer of the selective reception unit 69, and are read from the buffer with a certain timing (in general, equivalent to the encoding frame period). Here, the rate control information RFCS₁, RFCS₂ obtained in negotiation and the rate control information RFCS₃ at the time of initialization of the transcoder TC are compared.

First, in comparing the rate control information RFCS₁ and RFCS₂, the encoding rates are extracted. If an encoding rate exists within the rate control information RFCS₃, and moreover this rate is currently permitted by the radio network controller RNC₃, then a valid flag is set for the voice data packet. If only one valid voice data packet has arrived, this data packet is passed to the selective transmission unit 70. In subsequent cases, when two valid voice data packets have arrived, or when there is voice data with an invalid flag, these values are passed to the synthesis encoding unit (codec) 71.

The synthesis encoding unit 71 allocates a plurality of voice data packets to the respective decoders 71a, 71b, ..., and by decoding these linear PCM voice data is obtained; after addition, the data is again encoded by the encoder 71d to form a voice data packet, which is passed to the selective transmission unit 70. At this time, the encoding rate is within the rate control information RFCS₃, and moreover is currently permitted. This processing is similar even when a voice data packet with an invalid flag has been rate-converted and the flag made valid.

The rate specifier of the encoded voice data input to the selective transmission unit 70 of the transcoder TC₃ is (1) the rate specifier RFCI₁, according to the rate control information RFCS₁, if the voice data packet is a packet from the transcoder TC₁, and similarly, (2) the rate specifier RFCI₂ according to the rate control information RFCS₂, if the voice data packet is a packet from the transcoder TC₂. Consequently the radio network controller RNC₃ cannot correctly interpret the rate specifiers RFCI₁ and RFCI₂. Therefore, based on the previously validated encoding rate, a rate specifier RFCI₃ conforming to the rate control information RFCS₃ is again appended, the destination address is added, and the packet is transmitted.

### (G) Control for Transition from Three-Person Voice Communication to Four-Person Voice Communication

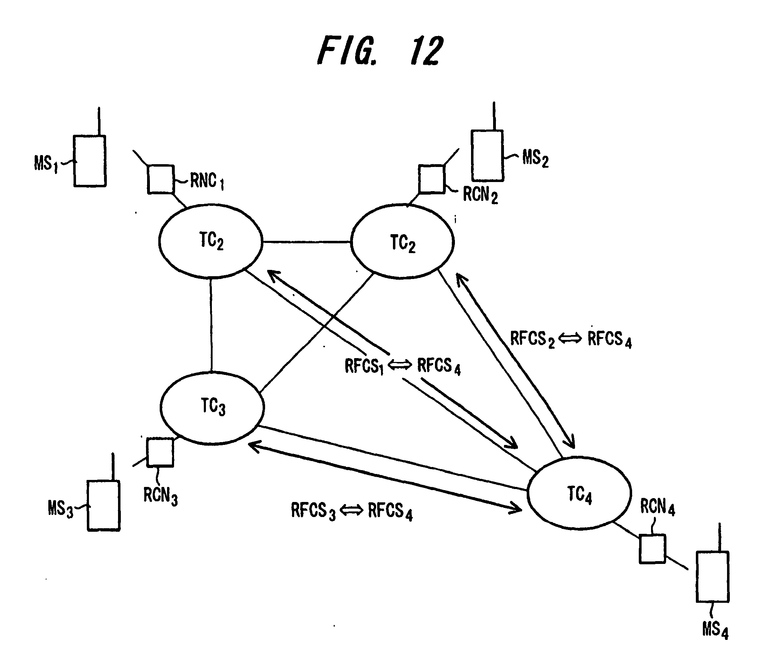

Fig. 12 explains control in a transition from three-person voice communication to four-person voice communication.

As three-person voice communication is already established, there is no TrFO connection mode, and a transition is made from a state in which assigned transcoders TC₁ to TC₃ are connected to each of the radio network controllers RNC₁ to RNC₃, to a connection mode for four-person voice communication.

First, an assigned TC₄ to connect to the radio network controller RNC₄ of the newly participating mobile station MS₄ of the fourth person is started. That is, (1) the transmission origin address RNC₄ₒᵤₜ of encoded voice data from the radio network controller RNC₄, received by the distributed communication unit 65 of the transcoder TC₄, (2) the transmission origin addresses of copies (the three transcoders TC₁ᵢₙ, TC₂ᵢₙ, TC₃ᵢₙ), (3) the transmission origin addresses (TC₁ₒᵤₜ, TC₂ₒᵤₜ, TC₃ₒᵤₜ) of encoded voice data from the transcoders TC₁, TC₂, TC₃ received by the selective reception unit 69, and (4) the transmission origin address RNC₄ᵢₙ for transmission to the radio network controller RNC₄ by the selective transmission unit 70, are provided, and four-person communication (communication parameter N=4) is started. At this time, negotiation between TCs is also specified. The difference with control in a transition from two-person voice communication to three-person voice communication is the fact that as parameters, the addresses of three points, rather than the addresses of two points, are set.

In the transcoders TC₁ to TC₃ engaged up to this point in conversation in three-point communication, instructions for the addition of path settings and TC negotiation are issued. For example, in the transcoder TC₁, (1) the transmission destination address TC₄ᵢₙ is newly added to the distributed transmission unit 65 in addition to the existing transmission destination addresses TC₂ᵢₙ, TC₃ᵢₙ, (2) the transmission origin address TC₄ₒᵤₜ is newly added to the selective reception unit 69 in addition to the existing transmission origin addresses TC₂ₒᵤₜ, TC₃ₒᵤₜ, and (3) the parameter N=3 is changed to N=4, and TC negotiation is specified. Even without these instructions, negotiation of the transcoder's own rate control information RFCS₁ with the transcoder TC₄ may be performed in response to negotiation of the rate control information RFCS₄ from the transcoder TC₄.

When, as described above, negotiation between the newly participating transcoder TC₄ and the transcoders TC₁ to TC₃ is completed, the subsequent operation of the distributed transmission units 65, selective reception units 69, and selective transmission units 70 in each of these transcoders TC₁ to TC₄ is similar to the operation in the transition from two-person voice communication to three-person voice communication. That is, except for changing from distribution to two persons to distribution to three persons, and from selection from two persons to selection from three persons, operation is the same. The above is the same for more general cases of voice communication among N persons.

The above is a detailed explanation, but the following means can be prepared:
(1). Means to use, as the packet type for negotiation, a packet type in which encoded voice data and rate control information are included in the same packet;
(2) means to control the transcoders TC₁, TC₂ at each of the points in existing two-point communication, so that negotiation of each transcoder's rate control information is executed in response to negotiation of rate control information from the transcoder TC₃ of the newly participating terminal;
(3) caller notification means, to notify the terminals already engaged in voice communication of a call from the newly participating terminal, together with a telephone number;
(4) means to switch the current voice communication temporarily from the current other-party terminal to the newly participating terminal, in response to a call from the newly participating terminal; and,
(5) billing means, to modify the system for billing to ensure equitable responsibility for fees, based on agreement among the speakers, in the event of multipoint voice communication.

By means of the above invention, when making a transition from two-point communication to three-point communication, it is possible to make preparations for three-point communication while maintaining two-point communication, that is, without interrupting the two-point communication; and after preparations are completed, a transition to three-point communication can be made, so that there is no momentary interruption of conversation.

Also, by means of this invention, when encoded voice data is received from only one other point, there is no need for decoding/encoding by a codec, so that voice quality can be maintained, and moreover when receiving encoded voice data simultaneously from two or more other points, decoding/synthesis/encoding is performed for each, so that the voices of a plurality of speakers can be heard simultaneously.

Further, by means of this invention, even when encoded voice data is received only from one other point, if the rate indicated by the rate specifier sent together with the encoded voice data is not permitted by the receiving device, the data is decoded based on this rate, the decoded voice data is encoded at a permitted encoding rate, and a rate specifier indicating the encoding rate is appended to the encoded voice data for transmission to the mobile station, so that the mobile station can reliably decode and output the received encoded voice data.

Also; by means of this invention, encoded voice data and rate control information are transmitted by an in-channel method, so that rate control information can be exchanged between codecs while maintaining two-point communication.

Further, by means of this invention, the separate control device which was required for multipoint communication in the prior art becomes unnecessary. Also, whereas in conventional methods multipoint control devices are linked by PCM data, posing the problem that a fixed broad band is required, in this invention VOX transmission of compressed encoded data is employed, so that circuits can be used efficiently. And, multipoint communication can be supported without modification to mobile terminals, so that existing terminals can be used without change.

## Claims

1. A multipoint communication method, in which voice communication takes place among mobile stations via communication control devices, having a transcoder (TC₁-TC₃) provided with a codec (71) which performs encoding and decoding of voice signals, and a radio network controller (RNC₁-RNC₃) provided with a rate control unit (34) which determines the encoding rate in the codec and indicates the encoding rate to the transcoder using the unit's own rate specifier (RFCI);
**characterized in that**:
in two-point communication in which voice communication takes place between two mobile stations (MS₁-MS₂), connecting a radio network controller (RNC₁) of the communication control device of one of the points to a radio network controller (RNC₂) of the communication control device of the other point, without passing through a transcoder (TC₁, TC₂), exchanging between the two radio network controller (RNC₁-RNC₂) rate control information (RFCS₁-RFCS₂), which specifies correspondence relations between rate specifiers (RFCI) and encoding rates, and replacing under control of a radio network controller a rate specifier which is sent by the radio network controller at the other point together with voice data by a rate specifier determined by referring to said rate control information, and transmitting the voice data with said determined rate specifier to the mobile station;
when making a transition from two-point communication to three-point communication, connecting radio network controllers (RNC₁-RNC₃) in the communication control devices at each of the three points to transcoders (TC₁-TC₃) and establishing communication paths between the transcoders, and continuing the two-point communication by transmitting the encoded voice data and rate specifier output from the radio network controller (RNC₁) at one point in said two-point communication through transcoders (TC₁-TC₂), to the radio network controller (RNC₂) of the other point of said two-point communication, and moreover transmitting the encoded voice data and rate specifier sent from the radio network controller (RNC₂) of the other point to the radio network controller (RNC₁) of said one point of said two-point communication, through transcoders (TC₁-TC₂);
in parallel with said transition control, making the transcoders (TC₁-TC₃) at all points to acquire the rate control information (RFCS₁-RFCS₃) for all points to shift to three-point communication;
in the transcoders at each point, transmitting encoded voice data for transmission which is made in duplicate to the transcoders of a plurality of other points; and then
in the transcoders at each point, replacing a rate specifier sent from other points together with encoded voice data by a rate specifier which is determined by referring to said rate control information and transmitting the voice data with this specifier to the mobile station, or decoding each encoded voice data from other points, encoding the decoded voice data at a permitted encoding rate, appending a rate specifier indicating the encoding rate to the encoded voice data, and transmitting the encoded voice data to the mobile station.

2. A multipoint communication method according to Claim 1, wherein:
when making a transition from m-point communication (m≥3) to (m+1)-point communication, connecting a radio network controller in the communication control device of the (m+1)th point to a transcoder while maintaining m-point communication, establishing communication paths between the transcoders at different points, and controlling the transcoders at each point to acquire the rate control information for all points, thereafter a transition to (m+1)-point communication is performed.

3. The multipoint communication method according to Claim 1, wherein:
when the transcoders at each point in multipoint communication receive encoded voice data from only one other point, replacing a rate specifier which is sent together with the encoded voice data by a rate specifier which is determined by referring to said rate control information, and transmitting the encoded voice data with this rate specifier to the mobile station; and
when the transcoders at each point in multipoint communication receive encoded voice data simultaneously from two or more other points, encoding at said codec (71) the encoded voice data from each point based on the encoding rate indicated by a specifier sent together with the voice data, combining the decoded voice signals and encoding the combined voice signals at a permitted encoding rate, and transmitting the encoded voice data together with a rate specifier indicating the encoding rate to the mobile station.

4. The multipoint communication method according to Claim 3, wherein:
even when the transcoders at each point receive encoded voice data from only one other point, if the encoding rate indicated by the rate specifier sent together with the encoded voice data is not permitted to that transcoder, decoding the received encoded voice data based on the rate specifier, encoding the decoded voice data at a permitted encoding rate and appending a rate specifier indicating the encoding rate to the encoded voice data, and transmitting the encoded voice data to the mobile station.

5. The multipoint communication method according to Claim 1, wherein:
when making a transition from two-point communication to three-point communication, transmitting rate control information to the transcoders (TC₁-TC₂) at both points from the radio network controller (RNC₁-RNC₂) at each of the points in said two-point communication, transmitting rate control information (RFCS₃) to the transcoder (TC₃) at the third point from the radio network controller (RNC₃) at the third point, and then exchanging the rate control information (RFCS₁-RFCS₃) between the transcoder (TC₁-TC₃) at the three points, so that the transcoders at each point are made to acquire the rate control information for all points.

6. The multipoint communication method according to Claim 5, wherein:
transcoders are activated by the initiation of negotiation of rate control information with the rate control unit, and perform negotiation of rate control information with other transcoders.

7. The multipoint communication method according to Claim 1, wherein:
said rate control unit uses the same channel used for encoded voice data to perform negotiation of rate control information with other transcoders.

8. A communication control device, comprising:
a transcoder (TC₁-TC₃) provided with a codec (71) arranged to encode and decode voice signals;
a radio network controller (RNC₁-RNC₃) provided with a rate control unit (34) arranged to determine the encoding rate of the codec and to indicate the encoding rate to the transcoder using the unit's own rate specifier (RFCI); and
a switching unit (23) arranged to switch routes,
**characterized in that**:
said radio network controller (RNC₁-RNC₃) comprises means (32) to negotiate rate control information, which specifies correspondence relations between rate specifiers and encoding rates, with the transcoder in the event of multipoint communication;
said transcoder comprises:
means (66) to perform negotiation of rate control information with the transcoders of other points in the event of three-point communication;
means (62,67) to accumulate rate control information for all points;
means (65) to create and broadcast copies of encoded voice data to all other points;
means (69) to receive encoded voice data from other points;
a codec (71) arranged to decode encoded voice data received from other points, at an encoding rate indicated by a rate specifier sent together with the encoded voice data, and to encode decoded voice data at a permitted encoding rate; and
a transmission unit (70) arranged to append a rate specifier corresponding to said encoding rate to encoded voice data output from the codec and transmit the encoded voice data with the rate specifier, or to replace the rate specifier of said received encoded voice data by a rate specifier which is determined by referring to said rate control information and transmitting the received encoded data with the new rate specifier, and
the switching unit (23) being arranged, while maintaining two-point communication, to establish a communication path between the radio network controller (RNC₁-RNC₃) and the transcoder (TC₁-TC₃) and communication paths between the transcoder and the transcoders of other points; the transcoder arranged to acquire rate control information for all points via said communication paths; and, in three-point communication, during transmission, the transcoder being arranged to replicate encoded voice data and transmit copies to the transcoders at other points, and during reception, the transcoder being arranged to replace the rate specifier sent together with encoded voice data by a rate specifier which is determined by referring to said rate control information, and to transmit the encoded voice data with said rate specifier to the mobile station, or to decode each of the received encoded voice data, to encode the decoded voice data at a permitted encoding rate, to append a rate specifier indicating the encoding rate to the encoded voice data, and to transmit the encoded voice data with said rate specifier to the mobile station.

9. The communication control device according to Claim 8, wherein:
in two-point communications, the switching unit (23) is arranged to connect the radio network controller to the radio network controllers of the communication control device of the other point, without passing through a transcoder, and each of the radio network controllers is arranged to exchange rate control information with the radio network controller of the other point, and to replace the rate specifier sent together with voice data from the radio network controller of the other point with a rate specifier which is determined by referring to said rate control information.

10. The communication control device according to Claim 9, wherein:
when making a transition from two-point communication to three-point communication, the switching unit (23) is arranged to connect the radio network controller to the transcoder and to establish communication paths between the transcoder and the transcoders of the other points; the transcoder being arranged to transmit encoded voice data output from the radio network controller to the radio network controller of the other point of the two-point communication, and to input the encoded voice data sent from the radio network controller of said other point to the radio network controller; and the radio network controller being arranged to maintain two-point communication by continuing control in said two-point communication.

11. The communication control device according to Claim 8, wherein:
in multipoint communication, when encoded voice data is received from only one other point, the transcoder is arranged to replace the rate specifier sent together with said encoded voice data with a rate specifier which is determined by referring to said rate control information, and to transmit the encoded voice data with new rate specifier to the mobile station; and, when encoded voice data is received simultaneously from two or more other points, the transcoder is arranged to decode each of the encoded voice data based on the rate indicated by the rate specifiers sent together with the encoded voice data, to synthesize the decoded voice signals, to encode the synthesized voice signals at a permitted encoding rate, to append a rate specifier indicating the encoding rate to the encoded voice data, and to transmit the data to the mobile station.

12. The communication control device according to Claim 11, wherein:
in multipoint communication, even when encoded voice data is received from only one other point, if the rate indicated by the rate specifier sent together with the encoded voice data is not permitted to the transcoder, the transcoder is arranged to decode the received encoded voice data based on said rate, encode the decoded voice data at a permitted encoding rate, and send the encoded voice data, together with a rate specifier indicating the encoding rate, to the mobile station.

13. The communication control device according to Claim 8, wherein:
said radio network controller is arranged to use the same channel as that used for encoded voice data to negotiate the rate control information with other transcoders.

## Patentansprüche

1. Mehrpunktkommunikationsverfahren, in welchem Sprachkommunikation zwischen Mobilstationen über Kommunikationssteuereinrichtungen stattfindet, mit einem Transcoder (TC₁-TC₃), der mit einem Codec (71) versehen ist, das Codierung und Decodierung von Sprachsignalen ausführt, und einem Funknetz-Controller (RNC₁-RNC₃), der mit einer Ratensteuereinheit (34) versehen ist, die die Codierrate in dem Codec bestimmt und die Codierrate dem Transcoder unter Verwendung des der Einheit eigenen Ratenspezifizierers (RFCI) anzeigt;
**gekennzeichnet durch**:
in einer Zweipunktkommunikation, in der Sprachkommunikation zwischen den Mobilstationen (MS₁₋MS₂) stattfindet, Verbinden eines Funknetz-Controllers (RNC₁) der Kommunikationssteuereinrichtung des einen Punkts mit einem Funknetz-Controller (RNC₂) der Kommunikationssteuereinrichtung des anderen Punkts ohne durch einen Transcoder (TC₁, TC₂) zu verlaufen, Austauschen von Ratensteuerinformation (RFCS₁-RFCS₂), die entsprechende Relationen zwischen Ratenspezifizierern (RFCI) und Codierraten spezifiziert, zwischen den zwei Funknetz-Controllern (RNC₁-RNC₂), und **durch** einen Funknetz-Controller gesteuertes Ersetzen eines Ratenspezifizierers, der von dem Funknetz-Controller bei dem anderen Punkt gemeinsam mit Sprachdaten gesendet wird, **durch** einen unter Bezugnahme auf die Ratensteuerinformation bestimmten Ratenspezifizierer, und Senden der Sprachdaten mit dem bestimmten Ratenspezifizierer zu der Mobilstation;
beim Ausführen eines Übergangs von Zweipunktkommunikation zu Dreipunktkommunikation, Verbinden der Funknetz-Controller (RNC₁-RNC₃) in der Kommunikationssteuereinrichtung bei jedem der drei Punkte mit Transcodern (TC₁, TC₃) und Einrichten von Kommunikationspfaden zwischen den Transcodern, und Fortsetzen der Zweipunktkommunikation **durch** Senden der codierten Sprachdaten und des von dem Funknetz-Controller (RNC₁) ausgegebenen Ratenspezifizierers an einem Punkt in der Zweipunktkommunikation **durch** Transcoder (TC₁, TC₂) zu dem Funknetz-Controller (RNC₂) des anderen Punkts der Zweipunktkommunikation, und darüber hinaus Senden der codierten Sprachdaten und des von dem Funknetz-Controller (RNC₂) des anderen Punkts gesendeten Ratenspezifizierers zu dem Funknetz-Controller (RNC₁) des einen Punkts der Zweipunktkommunikation **durch** Transcoder (TC₁, TC₂);
parallel zu der Übergangssteuerung, Veranlassen der Transcoder (TC₁, TC₃) an allen Punkten, die Ratensteuerinformation (RFCS₁-RFCS₃) für alle Punkte zu akquirieren zum Umschalten zur Dreipunktkommunikation;
in den Transcodern bei jedem Punkt Senden codierter Sprachdaten für eine Sendung, die doppelt vorgenommen wird zu den Transcodern einer Vielzahl von anderen Punkten; und dann
in den Transcodern an jedem Punkt, Ersetzen eines von anderen Punkten gemeinsam mit codierten Sprachdaten gesendeten Ratenspezifizierers **durch** einen Ratenspezifizierer, der unter Bezugnahme auf die Ratensteuerinformation bestimmt worden ist und Senden der Sprachdaten mit diesem Spezifizierer zu der Mobilstation, oder Decodieren jeweiliger Sprachdaten von anderen Punkten, Codieren der decodierten Sprachdaten bei einer vorbestimmten Codierrate, Anhängen eines Ratenspezifizierers, der die Codierrate angibt zu den codierten Sprachdaten, und Senden der codierten Sprachdaten an die Mobilstation.

2. Mehrpunktkommunikationsverfahren nach Anspruch 1, wobei:
wenn ein Übergang von m-Punkt Kommunikation (m≥3) zu (m+1)-Punktkommunikation vorgenommen wird, Verbinden eines Funknetz-Controllers in der Kommunikationssteuereinrichtung des (m+1)-ten Punktes mit einem Transcoder unter Beibehaltung der m-Punktkommunikation, Einrichten von Kommunikationspfaden zwischen den Transcodern an unterschiedlichen Punkten und Steuern der Transcoder an jeweiligen Punkten zum Akquirieren der Ratensteuerinformation für alle Punkte, woraufhin ein Übergang zu (m+1)-Punktkommunikation vorgenommen wird.

3. Mehrpunktkommunikationsverfahren nach Anspruch 1, wobei:
wenn die Transcoder an jedem Punkt in der Mehrpunktkommunikation codierte Sprachdaten von nur einem Punkt empfangen, ein Ratenspezifizierer, der gemeinsam mit den codierten Sprachdaten gesendet wird, durch einen Ratenspezifizierer ersetzt wird, der unter Bezugnahme auf die Ratensteuerinformation bestimmt wird, und die codierten Sprachdaten mit diesem Ratenspezifizierer an die Mobilstation gesendt werden; und
wenn die Transcoder an jedem Punkt in der Mehrpunktkommunikation codierte Sprachdaten simultan von zwei oder mehr anderen Punkten empfangen, die codierten Sprachdaten von jedem Punkt bei dem Codec (71) basierend auf der durch einen gemeinsam mit den Sprachdaten gesendeten Spezifizierer angegebenen Codierrate codiert werden, die decodierten Sprachsignale kombiniert werden und die kombinierten Sprachsignale bei einer zulässigen Codierrate codiert werden, und die codierten Sprachdaten gemeinsam mit einem eine Codierrate anzeigenden Ratenspezifizierer zu der Mobilstation gesendet werden.

4. Mehrpunktkommunikationsverfahren nach Anspruch 3, wobei:
selbst wenn die Transcoder an jedem Punkt codierte Sprachdaten nur von einem anderen Punkt empfangen, wenn die durch den gemeinsam mit den codierten Sprachdaten gesendeten Ratenspezifizierer angegebene Codierrate nicht für den Transcoder zulässig ist, der empfangenen codierten Sprachdaten basierend auf dem Ratenspezifizierer decodiert werden, die decodierten Sprachdaten bei einer zulässigen Codierrate codiert werden und ein die Codierrate anzeigender Ratenspezifizierer an die codierten Sprachdaten angehängt wird, und die codierten Sprachdaten an die Mobilstation gesendet werden.

5. Mehrpunktkommunikationsverfahren nach Anspruch 1, wobei:
wenn ein Übergang von Zweipunktkommunikation zu Dreipunktkommunikation vorgenommen wird, Ratensteuerinformationen zu den Transcodern (TC₁-TC₂) an beiden Punkten von dem Funknetz-Controller (RNC₁-RNC₂) bei jedem der Punkte in der Zweipunktkommunikation gesendet werden, Ratensteuerinformationen (RFCS₃) zu dem Transcoder (TC₃) bei dem dritten Punkt von dem Funknetz-Controller (RNC₃) bei dem dritten Punkt gesendet werden, und dann die Ratensteuerinformation (RFCS₁-RFCS₃) zwischen den Transcodern (TC₁-TC₃) an den drei Punkten ausgetauscht wird, so dass die Transcoder an jedem Punkt veranlasst werden, die Ratensteuerinformation für alle Punkte zu akquirieren.

6. Mehrpunktkommunikationsverfahren nach Anspruch 5, wobei
Transcoder aktiviert werden durch das Veranlassen eines Verhandelns von Ratensteuerinformation mit der Ratensteuereinheit, und Durchführen eines Verhandelns von Ratensteuerinformation mit anderen Transcodern.

7. Mehrpunktkommunikationsverfahren nach Anspruch 1, wobei
die Ratensteuerinformation denselben Kanal, der für die codierten Sprachdaten verwendet wird, verwendet zum Durchführen des Verhandelns der Ratensteuerinformation mit anderen Transcodern.

8. Mehrpunktkommunikationsverfahren, umfassend:
einen Transcoder (TC₁-TC₃), der mit einem Codec (71) versehehen ist, das eingerichtet ist zum Codieren und Decodieren von Sprachsignalen;
einen Funknetz-Controller (RNC₁-RNC₃), der mit einer Ratensteuereinheit (34) versehen ist, die eingerichtet ist zum Bestimmen der Codierrate des Codecs und zum Angeben der Codierrate zu dem Transcoder unter Verwendung des der Einheit eigenen Ratenspezifizierers (RFCI); und
eine Vermittlungseinheit (23), die eingerichtet ist zum Vermitteln von Leitwegen,
**dadurch gekennzeichnet, dass**
der Funknetz-Controller (RNC₁-RNC₃) eine Vorrichtung (32) umfasst zum Verhandeln von Ratensteuerinformation,
die einen Entsprechungszusammenhang zwischen Ratenspezifizierern und Codierraten spezifiziert, mit dem Transcoder im Falle einer Mehrpunktkommunikation;
der Transcoder umfasst:
eine Vorrichtung (66) zum Durchführen von Verhandlungen von Ratensteuerinformation mit den Transcodern anderer Punkte in dem Fall der Dreipunktkommunikation;
eine Vorrichtung (62, 67) zum Akkumulieren von Ratensteuerinformation für alle Punkte;
eine Vorrichtung (65) zum Erstellen und Rundsenden von Kopien von codierten Sprachdaten an alle anderen Punkte;
eine Vorrichtung (69) zum Empfangen codierter Sprachdaten von anderen Punkten;
ein Codec (71), das eingerichtet ist zum Decodieren codierter, von anderen Punkten empfangener Sprachdaten bei einer Codierrate, die durch einen gemeinsam mit den codierten Sprachdaten gesendeten Ratenspezifizierer angegeben wird, und zum Codieren decodierter Sprachdaten bei einer zulässigen Codierrate; und
eine Sendeeinheit (70), die eingerichtet ist, um einen der Codierrate entsprechenden Ratenspezifizierer an die von dem Codec ausgegebenen codierten Sprachdaten anzuhängen, und die codierten Sprachdaten mit dem Ratenspezifizierer zu senden oder den Ratenspezifizierer der empfangenen codierten Sprachdaten durch einen Ratenspezifizierer zu ersetzen, der bestimmt wird in Bezugnahme auf die Ratensteuerinformation, und die empfangenen codierten Daten mit dem neuen Ratenspezifizierer zu senden, und
die Vermittlungseinheit (23) eingerichtet ist, um unter Beibehaltung von Zweipunktkommunikation einen Kommunikationspfad zwischen dem Funknetz-Controller (RNC₁-RNC₃) und dem Transcoder (TC₁, TC₃) einzurichten und Kommunikationspfade zwischen dem Transcoder und den Transcodern anderer Punkte; der Transcoder eingerichtet ist zum Akquirieren von Ratensteuerinformation für alle Punkte über die Kommunikationspfade; und
der Transcoder eingerichtet ist, um in Dreipunktkommunikation, während des Sendens codierte Sprachdaten zu replizieren und Kopien an die Transcoder bei anderen Punkten zu senden, und der Transcoder eingerichtet ist, um während des Empfangs den gemeinsam mit codierten Sprachdaten gesendeten Ratenspezifizierer durch einen Ratenspezifizierer zu ersetzen, der unter Bezugnahme auf die Ratensteuerinformation bestimmt worden ist, und um die codierten Sprachdaten mit dem Ratenspezifizierer an die Mobilstation zu senden, oder um jeweilige der empfangenen codierten Sprachdaten zu decodieren, um die decodierten Sprachdaten bei einer zulässigen Codierrate zu codieren, um einen die Codierrate angebenden Ratenspezifizierer an die codierten Sprachdaten anzuhängen und um die codierten Sprachdaten mit dem Ratenspezifizierer an die Mobilstation zu senden.

9. Kommunikationssteuereinrichtung nach Anspruch 8, wobei:
die Vermittlungseinheit (23) eingerichtet ist, um in Zweipunktkommunikationen den Funknetz-Controller mit den Funknetz-Controllern der Kommunikationseinrichtung der anderen Punkte ohne Durchlaufen eines Transcoders zu verbinden, und jeder der Funknetz-Controller eingerichtet ist, um Ratensteuerinformation mit dem Funknetz-Controller des anderen Punkts auszutauschen, und um den gemeinsam mit Sprachdaten von dem Funknetz-Controller des anderen Punkts gesendeten Ratenspezifizierer durch einen Ratenspezifizierer zu ersetzen, der unter Bezugnahme auf die Ratensteuerinformation bestimmt wird.

10. Kommunikationssteuereinrichtung nach Anspruch 9, wobei:
die Vermittlungseinheit (23) eingerichtet ist, um beim Vornehmen eines Übergangs von Zweipunktkommunikation zu Dreipunktkommunikation den Funknetz-Controller mit dem Transcoder zu verbinden und um Kommunikationspfade zwischen dem Transcoder und den Transcodern der anderen Punkte einzurichten; der Transcoder eingerichtet ist, um hierbei codierte Sprachdaten, die von dem Funknetz-Controller ausgegeben werden, an den Funknetz-Controller des anderen Punkts der Zweipunktkommunikation zu senden, und um die codierten Sprachdaten, die von dem Funknetz-Controller des anderen Punkts zu dem Funknetz-Controller gesendet werden, einzugeben; und der Funknetz-Controller eingerichtet ist, um hierbei Zweipunktkommunikation beizubehalten durch Fortsetzen der Steuerung in der Zweipunktkommunikation.

11. Kommunikationssteuereinrichtung nach Anspruch 8, wobei:
der Transcoder eingerichtet ist, um bei Mehrpunktkommunikation, wenn codierte Sprachdaten von nur einem anderen Punkt empfangen werden, den gemeinsam mit den codierten Sprachdaten gesendeten Ratenspezifizierer durch einen Ratenspezifizierer zu ersetzen, der unter Bezugnahme auf die Ratensteuerinformation bestimmt wird, und um die codierten Sprachdaten mit dem neuen Ratenspezifizierer zu der Mobilstation zu senden; und, der Transcoder eingerichtet ist, um, wenn codierte Sprachdaten gleichzeitig von zwei oder mehr anderen Punkten empfangen werden, die jeweiligen codierten Sprachdaten basierend auf den gemeinsam mit den codierten Sprachdaten gesendeten Ratenspezifizieren zu decodieren, um die decodierten Sprachsignale zu synthetisieren, um die synthetisierten Sprachsignale bei einer zulässigen Codierrate zu codieren, um einen die Codierrate angebenden Ratenspezifizierer zu den codierten Sprachdaten anzuhängen, und um die Daten zu der Mobilstation zu senden.

12. Kommunikationssteuereinrichtung nach Anspruch 11, wobei
der Transcoder eingerichtet ist, um in Mehrpunktkommunikation, selbst wenn codierte Sprachdaten von nur einem anderen Punkt empfangen werden, wenn die durch den gemeinsam mit den codierten Sprachdaten gesendeten Ratenspezifizierer angegebene Rate nicht für den Transcoder zulässig ist, die empfangenen codierten Sprachdaten basierend auf dieser Rate zu decodieren, die decodierten Sprachdaten bei einer zulässigen Codierrate zu codieren, und die codierten Sprachdaten gemeinsam mit einem die Codierrate angebenden Ratenspezifizierer zu der Mobilstation zu senden.

13. Kommunikationssteuereinrichtung nach Anspruch 8, wobei
der Funknetz-Controller eingerichtet ist, um zum Verhandeln der Ratensteuerinformation mit anderen Transcodern denselben Kanal zu verwenden, der für codierte Sprachdaten verwendet wird.

## Revendications

1. Procédé de communication multipoint, dans lequel une communication vocale a lieu entre des stations mobiles via des dispositifs de commande de communication, ayant un transcodeur (TC₁ à TC₃) pourvu d'un codec (71) qui réalise le codage et le décodage des signaux vocaux, et un dispositif de commande de réseau radio (RNC₁ à RNC₃) pourvu d'une unité de commande de débit (34) qui détermine le débit de codage dans le codec et indique le débit de codage au transcodeur utilisant le spécifieur de débit propre d'unité (RFCI) ; **caractérisé en ce que** :
dans une communication à deux points dans laquelle une communication vocale a lieu entre deux stations mobiles (MS₁-MS₂), une connexion d'un dispositif de commande de réseau radio (RNC₁) du dispositif de commande de communication d'un des points à un dispositif de commande de réseau radio (RNC₂) du dispositif de commande de communication de l'autre point, sans passer à travers un transcodeur (TC₁, TC₂), échangeant entre les deux dispositifs de commande de réseau radio (RNC₁, RNC₂) des informations de commande de débit (RFCS₁-RFCS₂), qui spécifie des relations de correspondance entre des spécifieurs de débit (RFCI) et des débits de codage, et un remplacement sous la commande d'un dispositif de commande de réseau radio d'un spécifieur de débit qui est envoyé par le dispositif de commande de réseau radio à un autre point en même temps que les données vocales par un spécifieur de débit déterminé en se référant auxdites informations de commande de débit, et transmission des données vocales avec ledit spécifieur de débit déterminé à la station mobile ;
lors de l'établissement d'une transition à partir d'une communication à deux points à une communication à trois points, connexion des dispositifs de commande de réseau radio (RNC₁-RNC₃) dans le dispositif de commande de communication à chacun des trois points aux transcodeurs (TC₁-TC₃) et établissement des chemins de communication entre les transcodeurs, et poursuite de la communication à deux points en transmettant les données vocales codées et au spécifieur de débit fourni par le dispositif de commande de réseau radio (RNC₁) en un point dans ladite communication à deux points par l'intermédiaire des transcodeurs (TC₁-TC₂), au dispositif de commande de réseau radio (RNC₂). de l'autre point de ladite communication à deux points, et de plus transmission des données vocales codées au spécifieur de débit envoyé par le dispositif de commande de réseau radio (RNC₂) de l'autre point au dispositif de commande de réseau radio (RNC₁) dudit un point de ladite communication à deux points, par l'intermédiaire du transcodeur (TC₁-TC₂) ;
en parallèle avec ladite commande de transition, faire en sorte que les transcodeurs (TC₁-TC₃) en tous les points acquièrent les informations de commande de débit (RFCS₁-RFCS₃) pour tous les points pour passer à une communication à trois points ;
dans les transcodeurs sur chaque point, transmission des données vocales codées pour la transmission qui est faite dans la duplication aux transcodeurs d'une pluralité d'autres points ; et puis
dans les transcodeurs sur chaque point, remplacement d'un spécifieur de débit envoyé par les autres points en même temps que les données vocales codées par un spécifieur de débit qui est déterminé en se référant auxdites informations de commande de débit et transmission des données vocales avec ce spécifieur à la station mobile, ou décodage de chaque donnée vocale codée à partir des autres points, codage des données vocales décodées au débit de codage permis, ajout d'un spécifieur de débit indiquant le débit de codage aux données vocales codées, et transmission des données vocales codées à la station mobile.

2. Procédé de communication multipoint selon la revendication 1, dans lequel :
lors de l'établissement d'une transition à partir d'une communication d'un point m (m≥3) à une communication de (m+1) points, liaison d'un dispositif de commande de réseau radio dans le dispositif de commande de communication du (m+1)ième point à un transcodeur tout en maintenant une communication de m points, établissement des chemins de communication entre les transcodeurs à différents points, et commande des transcodeurs sur chaque point pour acquérir les informations de commande de débit pour tous les points, ensuite une transition pour une communication de (m+1) points est réalisée.

3. Procédé de communication multipoint selon la revendication 1, dans lequel :
lorsque les transcodeurs sur chaque point dans une communication multipoint reçoivent des données vocales codées à partir seulement de l'autre point, remplacement d'un spécifieur de débit qui est envoyé en même temps que les données vocales codées par le spécifieur de débit qui est déterminé en se référant auxdites informations de commande de débit, et transmission des données vocales codées avec ce spécifieur de débit à la station mobile ; et
lorsque les transcodeurs en chaque point dans une communication multipoint reçoivent des données vocales codées simultanément à partir de deux autres points ou plus, codage sur ledit codec (71) des données vocales codées à partir de chaque point sur la base du débit de codage indiqué par un spécifieur envoyé en même temps que les données vocales, combinaison des signaux vocaux décodés et codage des signaux vocaux mélangés à un débit de codage permis, et transmission des données vocales codées en même temps qu'un spécifieur de débit indiquant le débit de codage à la station mobile.

4. Procédé de communication multipoint selon la revendication 3, dans lequel :
même lorsque les transcodeurs à chaque point reçoivent des données vocales codées à partir seulement d'un autre point, si le débit de codage indiqué par le spécifieur de débit envoyé en même temps que les données vocales codées n'est pas permis pour ce transcodeur, le décodage des données vocales codées reçues sur la base du spécifieur de débit, codage des données vocales décodées au débit de codage à un débit de codage permis et ajout d'un spécifieur de débit indiquant le débit de codage aux données vocales codées, et transmission des données vocales codées à la station mobile.

5. Procédé de communication multipoint selon la revendication 1, dans lequel :
lors de l'établissement d'une transition à partir d'une communication à deux points à une communication à trois points, transmission des informations de commande de débit à des transcodeurs (TC₁ à TC₃) aux deux points à partir du dispositif de commande de réseau radio (RNC₁ à RNC₂) à chacun des points dans ladite communication à deux points, transmission des informations de commande de débit (RFCS₃) au transcodeur (TC₃) sur le troisième point du dispositif de commande de réseau radio (RNC₃) sur le troisième point, et puis échange des informations de commande de débit (RFCS₁ à RFCS₃) entre le transcodeur (TC₁ à TC₃) au troisième point, De sorte que les transcodeurs sur chaque point sont faits pour acquérir les informations de commande de débit pour tous les points.

6. Procédé de communication multipoint selon la revendication 5, dans lequel :
des transcodeurs sont activés par l'initiation de négociation des informations de commande de débit avec l'unité de commande de débit, et réalisation de négociation des informations de commande de débit avec d'autres transcodeurs.

7. Procédé de communication multipoint selon la revendication 1, dans lequel :
ladite unité de commande de débit utilise le même canal utilisé pour des données vocales codées pour réaliser une négociation des informations de commande de débit avec d'autres transcodeurs.

8. Dispositif de commande de communication, comprenant :
un transcodeur (TC₁ à TC₃) pourvu d'un codec (71) disposé pour coder et décoder des signaux vocaux ;
un dispositif de commande de réseau radio (RNC₁ à RNC₃) pourvu d'une unité de commande de débit (34) disposée pour déterminer le débit de codage du codec et pour indiquer le débit de codage au transcodeur utilisant le spécifieur de débit propre d'unité (RFCI) ; et
une unité de commutation (23) disposée pour commuter des routes, **caractérisé en ce que** :
ledit dispositif de commande de réseau radio (RNC₁ à RNC₃) comprend un moyen (32) pour négocier des informations de commande de débit, qui spécifie des relations de correspondance entre des spécifieurs de débit et des débits de codage, avec le transcodeur dans le cas de la communication multipoint ;
ledit transcodeur comprend :
un moyen (66) pour réaliser la négociation des informations de commande de débit avec les transcodeurs des autres points dans le cas d'une communication à trois points ;
un moyen (62, 67) pour accumuler des informations de commande de débit pour tous les points ;
un moyen (65) pour créer et diffuser des copies des données vocales codées à tous les autres points ;
un moyen (69) pour recevoir les données vocales codées à partir des autres points ;
un codec (71) disposé pour décoder des données vocales codées reçues à partir des autres points, à un débit de codage indiqué par un spécifieur de débit envoyé en même temps que les données vocales codées, et pour coder des données vocales décodées à un débit de codage permis ; et
une unité de transmission (70) disposée pour ajouter un spécifieur de débit correspondant audit débit de codage pour des données vocales codées fournies par le codec et transmettre les données vocales codées avec le spécifieur de débit, ou pour remplacer le spécifieur de débit desdites données vocales codées reçues par un spécifieur de débit qui est déterminé en se référant auxdites informations de commande de débit et transmettre les données codées reçues au nouveau spécifieur de débit, et
l'unité de commutation (23) étant disposée, tout en maintenant une communication à deux points, pour établir un chemin de communication entre le dispositif de commande de réseau radio (RNC₁ à RNC₃) et le transcodeur (TC₁ à TC₃) et les chemins de communication entre le transcodeur et les transcodeurs des autres points ; le transcodeur disposé pour acquérir les informations de commande de débit pour tous les points via lesdits chemins de communication ; et, dans une communication à trois points, pendant la transmission, le transcodeur étant disposé pour répliquer des données vocales codées et transmettre des copies aux transcodeurs aux autres points, et pendant la réception, le transcodeur étant disposé pour remplacer le spécifieur de débit envoyé en même temps que les données vocales codées par un spécifieur de débit qui est déterminé en se référant auxdites informations de commande de débit, et pour transmettre les données vocales codées avec ledit spécifieur de débit à la station mobile, et pour décoder chacune des données vocales codées reçues, pour coder les données vocales décodées à un débit de codage permis, pour ajouter un spécifieur de débit indiquant le débit de codage aux données vocales codées, et pour transmettre les données vocales codées avec ledit spécifieur de débit à la station mobile.

9. Dispositif de commande de communication selon la revendication 8, dans lequel :
dans des communications à deux points, l'unité de commutation (23) est disposée pour raccorder le dispositif de commande de réseau radio au dispositif de commande de réseau radio du dispositif de commande de communication de l'autre point, sans passer à travers un transcodeur, et chacun des dispositifs de commande de réseau radio est disposé pour échanger des informations de commande de débit avec le dispositif de commande de réseau radio de l'autre point, et pour remplacer le spécifieur de débit envoyé en même temps que les données vocales à partir du dispositif de commande de réseau radio de l'autre point avec un spécifieur de débit qui est déterminé en se référant auxdites informations de commande de débit.

10. Dispositif de commande de communication selon la revendication 9, dans lequel :
lors de l'établissement d'une transition à partir d'une communication à deux points à une communication à trois points, l'unité de commutation (23) est disposée pour relier des dispositifs de commande de réseau radio au transcodeur et pour établir des chemins de communication entre le transcodeur et les transcodeurs des autres points ; le transcodeur étant disposé pour transmettre des données vocales codées fournies par le dispositif de commande de réseau radio au dispositif de commande de réseau radio de l'autre point de la communication à deux points, et pour entrer les données vocales codées envoyées par le dispositif de commande de réseau radio dudit autre point au dispositif de commande de réseau radio, et le dispositif de commande de réseau radio étant disposé pour maintenir une communication à deux points en continuant la commande dans ladite communication à deux points.

11. Dispositif de commande de communication selon la revendication 8, dans lequel :
dans une communication multipoint, lorsque les données vocales codées sont reçues à partir seulement d'un autre point, le transcodeur est disposé pour remplacer le spécifieur de débit envoyé en même temps que lesdites données vocales codées avec un spécifieur de débit qui est déterminé en se référant auxdites informations de commande de débit, et pour transmettre les données vocales codées avec le nouveau spécifieur de débit à la station mobile ; et, lorsque les données vocales codées sont reçues simultanément à partir de deux autres points ou plus, le transcodeur est disposé pour décoder chacune des données vocales codées sur la base du débit indiqué par les spécifieurs de débit envoyés en même temps que les données vocales codées, pour synthétiser les signaux vocaux décodés, pour coder les signaux vocaux synthétisés au débit de codage permis pour ajouter un spécifieur de débit indiquant le débit de codage aux données vocales codées, et pour transmettre les données à la station mobile.

12. Dispositif de commande de communication selon la revendication 11, dans lequel :
dans une communication multipoint, même lorsque des données vocales codées sont reçues à partir seulement d'un autre point, si le débit indiqué par les spécifieurs de débit envoyés en même temps que les données vocales codées n'est pas permis au transcodeur, le transcodeur est disposé pour décoder les données vocales codées reçues sur la base dudit débit, coder les données vocales décodées au débit de codage permis, et envoyer les données vocales codées, en même temps qu'un spécifieur de débit indiquant le débit de codage à la station mobile.

13. Dispositif de commande de communication selon la revendication 8, dans lequel :
ledit dispositif de commande de réseau radio est disposé pour utiliser le même canal que celui utilisé pour les données vocales codées pour négocier les informations de commande de débit avec d'autres transcodeurs.
